# EUROPEAN PATENT APPLICATION

(11) **EP 4 723 695 A1**
(43) Date of publication of application: **08.04.2026**
(21) Application number: 24848044.4
(22) Date of filing: 19.07.2024
(51) Int. Cl.: H04W 4/80, H04M 1/72412, G06F 3/14, G06F 3/147

(54) **SHORT-RANGE COMMUNICATION METHOD, ELECTRONIC DEVICE AND COMPUTER STORAGE MEDIUM**

(30) Priority: 31.07.2023 CN 202310963610; 06.12.2023 CN 202311666495
(71) Applicant: Huawei Technologies Co., Ltd., Shenzhen, Guangdong 518129 (CN)
(72) Inventor: JIA, Qinyong, Shenzhen, Guangdong 518129 (CN); ZHU, Renfei, Shenzhen, Guangdong 518129 (CN)
(74) Representative: Pfenning, Meinig & Partner mbB
(86) International application number: PCT/CN2024/106393
(87) International publication number: WO 2025/026085

(57) **Abstract**

This application discloses a short-range communication method, an electronic device, and a computer storage medium. The electronic device includes a short-range communication chip, a corresponding first display screen, and a corresponding second display screen. The method includes: receiving a first operation performed on the first display screen; establishing a connection to a first communication device by using the short-range communication chip, and performing binding to the first communication device by using the first display screen; and displaying a first interface on the first display screen, and displaying a second interface on the second display screen, where the first interface and the second interface each include the first communication device in a paired state, the first communication device on the first interface is visually distinguished, and the first communication device on the second interface is not visually distinguished. The first display screen and the second display screen may share a short-range communication chip, thereby improving utilization of the short-range communication chip. In addition, a user may obtain a binding relationship between a communication device and a display screen based on a display interface, to ensure that the user can normally use a multi-screen device to perform a multi-screen service.

## Description

This application claims priorities to Chinese Patent Application No. 202310963610.0, filed with the China National Intellectual Property Administration on July 31, 2023 and entitled "BLUETOOTH USE METHOD, ELECTRONIC DEVICE, AND COMPUTER STORAGE MEDIUM", and to Chinese Patent Application No. 202311666495.7, filed with the China National Intellectual Property Administration on December 6, 2023 and entitled "SHORT-RANGE COMMUNICATION METHOD, ELECTRONIC DEVICE, AND COMPUTER STORAGE MEDIUM", both of which are incorporated herein by reference in their entireties.

### TECHNICAL FIELD

This application relates to the field of computer technologies, and in particular, to a short-range communication method, an electronic device, and a computer storage medium.

### BACKGROUND

Currently, a plurality of Bluetooth chips may be provided on a multi-screen device and are allocated to different display screens. In other words, each screen in the multi-screen device is independently configured with a corresponding Bluetooth chip, and each screen may be connected to a Bluetooth device such as a headset by using the configured Bluetooth chip, to implement collaboration between each screen and the connected Bluetooth device. For example, a vehicle has a central control screen, a front passenger screen, and a rear passenger screen, and each screen is configured with a Bluetooth chip. The Bluetooth chip configured for the central control screen may be configured to connect to a mobile phone of a driver, and the Bluetooth chip configured for the front passenger screen may be configured to connect to a headset, so that a user in a front passenger seat listens to a front passenger screen related audio by using the headset. The rear passenger screen is used similarly to the front passenger screen. However, in this case, utilization of the Bluetooth chip is low. For example, the following case may occur: When the front passenger screen outputs data by using the connected Bluetooth device, the rear passenger screen does not output the data by using the connected Bluetooth device. In other words, when the Bluetooth chip configured for the front passenger screen is used, the Bluetooth chip configured for the rear passenger screen is not used, resulting in high device costs.

### SUMMARY

This application discloses a short-range communication method, an electronic device, and a computer storage medium, to improve utilization of a short-range communication chip, reduce costs, and ensure that a multi-screen device can normally perform a multi-screen service.

According to a first aspect, this application provides a short-range communication method, applied to an electronic device. The electronic device includes a short-range communication chip, a first display screen, and a second display screen, and both the first display screen and the second display screen correspond to the short-range communication chip. The method includes: receiving a first operation performed on the first display screen; in response to the first operation, establishing a connection to a first communication device by using the short-range communication chip, and performing binding to the first communication device by using the first display screen; and displaying a first interface on the first display screen, and displaying a second interface on the second display screen, where the first interface includes the first communication device in a paired state, the first communication device on the first interface is visually distinguished, the second interface includes the first communication device in the paired state, and the first communication device on the second interface is not visually distinguished.

In some examples, that the first communication device is bound to the first display screen includes: The first communication device is connected to the electronic device, and the first display screen may communicate with the first display screen by using the short-range communication chip, to implement a service of the first display screen.

In some examples, that the first communication device on the first interface is in the paired state and is visually distinguished indicates that the first display screen is bound to the first communication device; and that the first communication device on the second interface is in the paired state and is not visually distinguished indicates that the second display screen is not bound to the first communication device.

In the foregoing method, the first display screen and the second display screen may share one short-range communication chip, and a display screen in need may be bound to and communicate with a communication device by using the short-range communication chip, to avoid a case in which some short-range communication chips are idle when one short-range communication chip is configured for one display screen. This improves utilization of the short-range communication chip and reduces costs. In addition, after the first communication device is bound to the first display screen, the first communication device in the paired state may be displayed on both the first display screen and the second display screen, instead of being displayed only on the first display screen, to avoid a case in which a user of the second display screen cannot obtain a paired communication device that is not bound to the second display screen. The first communication device is visually distinguished on the first display screen bound to the first communication device, and the first communication device is not visually distinguished on the second display screen not bound to the first communication device, so that a user can intuitively obtain whether the display screen has a binding relationship with the first communication device, to ensure that the user can use a current display screen and the communication device bound to the current display screen to perform a corresponding service, that is, ensure that a multi-screen device can normally perform a multi-screen service. This improves user experience.

In a possible implementation, the first interface and the second interface are short-range communication function setting interfaces.

In the foregoing method, the user can view, on the short-range communication function setting interface, whether the first communication device in the paired state is visually distinguished, to obtain whether a current display screen has a binding relationship with the first communication device. In other words, related information is added to an existing common function interface, which better conforms to a use habit of the user and further improves user experience.

In a possible implementation, before receiving the first operation performed on the first display screen, the method further includes: finding, through scanning, the first communication device by using the short-range communication chip, displaying a third interface on the first display screen, and displaying a fourth interface on the second display screen, where the third interface includes the first communication device in an unpaired state, the fourth interface includes the first communication device in the unpaired state, and the first operation is an operation performed on the first communication device on the third interface.

In some examples, the third interface and the fourth interface are short-range communication function setting interfaces.

In the foregoing method, the first display screen and the second display screen may share one short-range communication chip. Communication devices found through scanning by using the short-range communication chip may be displayed on the first display screen and the second display screen. A user of the first display screen and a user of the second display screen can view the communication devices found through scanning by using the short-range communication chip, and select, based on their needs, whether to connect to a communication device and which device to connect to. This ensures consistent short-range communication functions provided for the users of the first display screen and the second display screen, and ensures use experience of a plurality of users.

In a possible implementation, a visually distinguished manner includes at least one of the following: highlighting, displaying in bold, displaying in italics, underlining, a background shade, a border around characters, a font color different from that of another text, a font type different from that of another text, and a font size different from that of another text.

In the foregoing method, the electronic device visually distinguishes the first communication device in various manners, and an application scenario is wider.

In a possible implementation, the first interface includes first prompt information and/or the second interface includes second prompt information; the first prompt information indicates that the first communication device is connected to the electronic device and/or the first prompt information indicates that the first communication device is bound to the first display screen; and the second prompt information indicates that the first communication device is connected to the electronic device and/or the second prompt information indicates that the first communication device is bound to the first display screen.

In some examples, when the first prompt information is "Connected", it may indicate that the first communication device is connected to the electronic device; or when the first prompt information is "Connected to the first display screen", it may indicate that the first communication device is bound to the first display screen (including that the first communication device is connected to the electronic device).

In the foregoing method, the first display screen and/or the second display screen may display prompt information related to the first communication device, so that the user can more intuitively obtain a display screen bound to the first communication device and whether the first communication device is connected to the electronic device. This further improves user experience.

In a possible implementation, the method further includes: receiving a second operation performed on the first communication device on the second interface; in response to the second operation, cancelling binding to the first communication device by using the first display screen, and performing binding to the first communication device by using the second display screen; and displaying a fifth interface on the first display screen, and displaying a sixth interface on the second display screen, where the fifth interface includes the first communication device in the paired state, the first communication device on the fifth interface is not visually distinguished, the sixth interface includes the first communication device in the paired state, and the first communication device on the sixth interface is visually distinguished.

In the foregoing method, after the first display screen is bound to the first communication device (including that the electronic device is connected to the first communication device), the user of the second display screen can directly operate the first communication device displayed on the second display screen, to switch a display screen bound to the first communication device from the first display screen to the second display screen, without a need for the user to first disconnect the electronic device from the first communication device (to unbind the first display screen from the first communication device) and then control the second display screen to bind the first communication device (including that the electronic device reestablishes a connection to the first communication device). In other words, the first display screen and the second display screen share one short-range communication chip, enabling the user to modify the binding relationship between the display screen and the communication device by performing one operation, to reduce user operations, reduce device power consumption, and further improve user experience.

In a possible implementation, the short-range communication chip supports connections to N communication devices, and N is an integer greater than 1. The method further includes: when the short-range communication chip establishes connections to S communication devices, receiving a third operation performed on the first display screen, where the third operation is used to trigger a connection to a second communication device, the second communication device is different from the S communication devices, and S is a positive integer less than N; in response to the third operation, determining whether (S+1) is less than or equal to N; and when (S+1) is less than or equal to N, establishing the connection to the second communication device by using the short-range communication chip, and performing binding to the second communication device by using the first display screen.

In the foregoing method, the first display screen and the second display screen share one short-range communication chip. When receiving a user operation (for example, the third operation) that is performed on any one of the display screens (for example, the first display screen) and that is used to trigger a connection to a new communication device, the electronic device first determines whether the short-range communication chip can currently support addition of a new connection, that is, determines whether (S+1) is less than or equal to N; and when a determining result indicates that (S+1) is less than or equal to N, the electronic device connects the short-range communication chip to the new communication device, to ensure that the short-range communication chip can normally support connections to the first display screen and the second display screen, and avoid a case in which when the new connection is added, the first display screen and the second display screen cannot normally use bound communication devices due to an abnormal existing connection or new connection. This reduces occurrence of an exception from a root cause and improves function availability.

In a possible implementation, the method further includes: when (S+1) is greater than N, displaying third prompt information on the first display screen, where the third prompt information indicates that the connection to the second communication device is unachievable; when (S+1) is greater than N, disconnecting the short-range communication chip from a third communication device in the S communication devices, establishing the connection to the second communication device by using the short-range communication chip, and performing binding to the second communication device by using the first display screen; or when (S+1) is greater than N, establishing the connection to the second communication device by using the short-range communication chip, and performing binding to the second communication device by using the first display screen, where the second communication device bound to the first display screen is in an unavailable state.

In the foregoing method, when it is determined that the short-range communication chip cannot support addition of a new connection, there may be a plurality of processing manners for the electronic device. This broadens application scenarios when ensuring that the short-range communication chip can normally support the connections to the first display screen and the second display screen.

In a possible implementation, the short-range communication chip supports connections to N communication devices for an audio service, and the S communication devices and the second communication device each correspond to the audio service.

In the foregoing method, the short-range communication chip supports a maximum of N audio connections. When S audio connections are already established, if the user intends to add a new audio connection, the electronic device may determine whether the short-range communication chip can currently support addition of the new audio connection, that is, determine whether (S+1) is less than or equal to N. When a determining result indicates that (S+1) is less than or equal to N, the electronic device connects the short-range communication chip to a communication device for a new audio service. This ensures that the short-range communication chip can normally support audio connections to the first display screen and the second display screen, and thus ensures that the multi-screen device can normally perform a multi-screen service.

In a possible implementation, the short-range communication chip supports connections to N communication devices for an audio service. Determining whether (S+1) is less than or equal to N includes: when the S communication devices and the third communication device each correspond to the audio service, determining whether (S+1) is less than or equal to N. The method further includes: when the S communication devices correspond to the audio service, and the third communication device corresponds to another service other than the audio service, in response to the third operation, establishing a connection to the third communication device by using the short-range communication chip, and performing binding to the third communication device by using the first display screen.

In the foregoing method, the short-range communication chip supports a maximum of N audio connections. When S audio connections are already established, if the user intends to add a new connection, the electronic device may obtain a service of the new connection, and determine, based on an obtaining result, whether the short-range communication chip can currently support addition of the new connection. In other words, considering that a maximum quantity of connections supported by the short-range communication chip may vary depending on a service, the electronic device may determine, based on an actual service, whether to add the new connection, to ensure that the short-range communication chip can normally support the connections to the first display screen and the second display screen. This leads to more efficient use of the short-range communication chip, thereby further improving utilization of the short-range communication chip.

In a possible implementation, the method further includes: receiving a fourth operation performed on a fourth communication device on the second interface; in response to the fourth operation, establishing a connection to the fourth communication device by using the short-range communication chip, and performing binding to the fourth communication device by using the second display screen; and displaying a seventh interface on the first display screen, and displaying an eighth interface on the second display screen, where the seventh interface includes the first communication device and the fourth communication device that are in a paired state, the first communication device on the seventh interface is visually distinguished, the fourth communication device on the seventh interface is not visually distinguished, the eighth interface includes the first communication device and the fourth communication device that are in the paired state, the first communication device on the eighth interface is not visually distinguished, and the fourth communication device on the eighth interface is visually distinguished.

In the foregoing method, the first display screen and the second display screen share one short-range communication chip. When the first display screen is bound to the first communication device, the second display screen may be bound to the fourth communication device in response to a user operation, that is, a binding relationship of the first display screen and a binding relationship of the second display screen do not affect each other. Both the first display screen and the second display screen may implement corresponding services by using the bound communication devices, that is, may independently implement respective services without affecting each other, and ensure that the multi-screen device can normally perform a multi-screen service.

In a possible implementation, the first interface includes the first prompt information, and the first prompt information indicates that the first communication device is connected to the electronic device and indicates that the first communication device is bound to the first display screen. The method further includes: receiving a fifth operation performed on a fifth communication device on the first interface; in response to the fifth operation, disconnecting the short-range communication chip from the first communication device, establishing a connection to the fifth communication device by using the short-range communication chip, and performing binding to the fifth communication device by using the first display screen; and displaying a ninth interface on the first display screen, where the ninth interface includes the first communication device and the fifth communication device that are in a paired state, the first communication device on the ninth interface is not visually distinguished, the ninth interface does not include the first prompt information, the fifth communication device on the ninth interface is visually distinguished, the ninth interface includes fourth prompt information, and the fourth prompt information indicates that the fifth communication device is connected to the electronic device and indicates that the fifth communication device is bound to the first display screen.

In the foregoing method, after the first display screen is bound to the first communication device, the user of the first display screen may directly operate the fifth communication device displayed on the first display screen, to switch a communication device bound to the first display screen from the first communication device to the fifth communication device, without a need for the user to manually disconnect the electronic device from the first communication device (to unbind the first display screen from the first communication device) and then control the first display screen to bind the fifth communication device. This reduces user operations and further improves user experience.

In a possible implementation, the first interface includes the first prompt information, and the first prompt information indicates that the first communication device is connected to the electronic device and indicates that the first communication device is bound to the first display screen. The method further includes: receiving a sixth operation performed on a sixth communication device on the first interface; in response to the sixth operation, establishing a connection to the sixth communication device by using the short-range communication chip, and performing binding to the sixth communication device by using the first display screen; and displaying a tenth interface on the first display screen, where the tenth interface includes the first communication device and the sixth communication device that are in a paired state, the first communication device and the sixth communication device on the tenth interface are visually distinguished, the tenth interface includes the first prompt information and fifth prompt information, and the fifth prompt information indicates that the sixth communication device is connected to the electronic device and indicates that the sixth communication device is bound to the first display screen.

In the foregoing method, after the first display screen is bound to the first communication device, the user of the first display screen can directly operate the sixth communication device displayed on the first display screen, to add the sixth communication device to the communication device bound to the first display screen. The first display screen may be bound to a plurality of communication devices, enabling scenarios of collaboration between the display screen and the plurality of communication devices. This meets a user requirement associated with these scenarios and broadens application scenarios.

In a possible implementation, establishing the connection to the sixth communication device by using the short-range communication chip, and performing binding to the sixth communication device by using the first display screen include: when a multi-device connection function of the first communication device is enabled, establishing the connection to the sixth communication device by using the short-range communication chip, and performing binding to the sixth communication device by using the first display screen. The method further includes: when the multi-device connection function of the first communication device is disabled, disconnecting the short-range communication chip from the first communication device, establishing the connection to the sixth communication device by using the short-range communication chip, and performing binding to the sixth communication device by using the first display screen; or when the multi-device connection function of the first communication device is disabled, displaying sixth prompt information on the first display screen, where the sixth prompt information indicates that the connection to the sixth communication device is unachievable.

In the foregoing method, the first communication device and another communication device can be bound to a display screen at the same time only when the multi-device connection function of the first communication device is enabled. The user may customize whether to enable a function of binding a display screen to a plurality of communication devices, to meet a personalized requirement of the user.

In a possible implementation, the method further includes: The first display screen communicates with the first communication device by using the short-range communication chip.

In the foregoing method, after the first display screen is bound to the first communication device, the first display screen may communicate with the first communication device by using the short-range communication chip, to implement a related service on the first display screen, without requiring an additional operation or processing logic. This method is simpler to implement, reduces user operations, and also reduces device power consumption.

In a possible implementation, the short-range communication chip supports communication with P communication devices, and P is a positive integer. The method further includes: when the electronic device communicates with T communication devices by using the short-range communication chip, receiving a seventh operation performed on the first display screen, where the seventh operation is used to trigger use of the first communication device, the first communication device is different from the T communication devices, and T is a positive integer less than P; in response to the seventh operation, determining whether (T+1) is less than or equal to P; and when (T+1) is less than or equal to P, communicating, by the first display screen, with the first communication device by using the short-range communication chip; or when (T+1) is greater than P, displaying seventh prompt information on the first display screen, where the seventh prompt information indicates that the first communication device is unavailable.

In the foregoing method, the first display screen and the second display screen share one short-range communication chip. When receiving a user operation (for example, the seventh operation, where the seventh operation is used to trigger addition of a communication connection between the first display screen and the first communication device) that is performed on any one of the display screens (for example, the first display screen) and that is used to trigger addition of a new communication connection, the electronic device first determines whether the short-range communication chip can currently support addition of the new communication connection, that is, determines whether (T+1) is less than or equal to P; and when a determining result indicates that (T+1) is less than or equal to P, the short-range communication chip adds the new communication connection, to ensure that the short-range communication chip can normally support communication connections to the first display screen and the second display screen, and avoid a case in which when the new communication connection is added, the first display screen and the second display screen cannot normally use bound communication devices due to an abnormal existing communication connection or new communication connection. This reduces occurrence of an exception from a root cause and improves function availability.

In a possible implementation, the short-range communication chip supports transmission of audio data with P communication devices. Determining whether (T+1) is less than or equal to P includes: when the T communication devices and the first communication device each correspond to the audio service, determining whether (T+1) is less than or equal to P. The method further includes: When the T communication devices correspond to the audio service, and the first communication device corresponds to another service other than the audio service, in response to the seventh operation, the first display screen communicates with the first communication device by using the short-range communication chip.

In the foregoing method, the short-range communication chip supports a maximum of P audio communication connections. When T audio communication connections already exist, if the user intends to add a new communication connection, the electronic device may obtain a service of the new communication connection, and determine, based on an obtaining result, whether the short-range communication chip can currently support addition of the new communication connection. In other words, considering that a maximum quantity of communication connections supported by the short-range communication chip may vary depending on a service, the electronic device may determine, based on an actual service, whether to add the new communication connection, to ensure that the short-range communication chip can normally support communication connections to the first display screen and the second display screen. This leads to more efficient use of the short-range communication chip, thereby further improving utilization of the short-range communication chip.

In a possible implementation, the method further includes: receiving an eighth operation performed on the second display screen, where the eighth operation is used to trigger deletion of the first communication device; in response to the eighth operation, determining whether the first display screen communicates with the first communication device by using the short-range communication chip; and when the first display screen communicates with the first communication device by using the short-range communication chip, displaying eighth prompt information on the second display screen, where the eighth prompt information indicates that the first communication device is undeletable; or when the first display screen does not communicate with the first communication device by using the short-range communication chip, canceling pairing between the short-range communication chip and the first communication device.

In some examples, after the second display screen is bound to a communication device, the electronic device may alternatively receive a user operation that is performed on the first display screen and that is used to trigger deletion of the communication device, and in response to the user operation, determine whether the second display screen communicates with the communication device by using the short-range communication chip. When a determining result indicates that the second display screen communicates with the communication device by using the short-range communication chip, the first display screen displays prompt information indicating that the communication device is undeletable; or when a determining result indicates that the second display screen does not communicate with the communication device by using the short-range communication chip, the electronic device deletes the communication device. In other words, the first display screen and the second display screen share one short-range communication chip, and the user may operate any one of the display screens (for example, the second display screen) to trigger deletion of a communication device bound to another display screen (for example, the first communication device bound to the first display screen). That is, each display screen of the electronic device provides a function of deleting a communication device, and meets a user requirement of each screen.

In the foregoing method, when receiving a user operation used to trigger deletion of a communication device, the electronic device first determines whether the communication device is used by a display screen bound to the communication device (that is, whether the communication device communicates with the display screen). If a determining result indicates that the communication device is used by the display screen, the electronic device does not delete the communication device. The electronic device deletes the communication device only if a determining result indicates that the communication device is not used by the display screen. This avoids poor user experience for a user of the communication device, caused by accidentally deleting the communication device when the communication device is in use, making a function of deleting a communication device more intelligent.

In a possible implementation, the method further includes: receiving a ninth operation performed on the second display screen, where the ninth operation is used to trigger deletion of the first communication device; in response to the ninth operation, determining whether to perform binding to the first communication device by using the first display screen; and when the first display screen is bound to the first communication device, displaying ninth prompt information on the second display screen, where the ninth prompt information indicates that the first communication device is undeletable; or when the first display screen is not bound to the first communication device, canceling pairing between the short-range communication chip and the first communication device.

In the foregoing method, when receiving a user operation used to trigger deletion of a communication device, the electronic device first determines whether the communication device is bound to another display screen other than a current display screen. If a determining result indicates that the communication device is bound to the another display screen, the communication device is not deleted; or if a determining result indicates that the communication device is not bound to the another display screen, the communication device is deleted. This avoids poor user experience for a user of a display screen bound to the communication device, caused by accidentally deleting the communication device when the communication device is bound to another display screen, making a function of deleting a communication device more intelligent.

In a possible implementation, the method further includes: disconnecting the short-range communication chip from the first communication device; and when establishing the connection to the first communication device by using the short-range communication chip, performing binding to the first communication device by using the first display screen.

In the foregoing method, after the first communication device is disconnected from the electronic device, upon the next connection, the first communication device may be directly bound to a display screen to which the first communication device is last bound, without requiring a manual operation of the user, making a binding function of short-range communication more intelligent. This improves user experience.

In a possible implementation, the method further includes: disconnecting the short-range communication chip from the first communication device; and when establishing the connection to the first communication device by using the short-range communication chip, performing binding to the first communication device by using a preset display screen of the electronic device, where the preset display screen is the first display screen or the second display screen.

In the foregoing method, after the first communication device is disconnected from the electronic device, upon the next connection, the first communication device may be directly bound to the preset display screen, without requiring a manual operation of the user. This improves user experience.

In a possible implementation, the method further includes: disconnecting the short-range communication chip from the first communication device; when establishing the connection to the first communication device by using the short-range communication chip, detecting an area in which the first communication device is located; and when the first communication device is located in an area of the first display screen, performing binding to the first communication device by using the first display screen; or when the first communication device is located in an area of the second display screen, performing binding to the first communication device by using the second display screen.

In the foregoing method, after the first communication device is disconnected from the electronic device, upon the next connection, the electronic device may detect an area in which the first communication device is located, and determine that the first communication device is bound to a display screen in the area, without requiring a manual operation of the user, making a binding function of short-range communication more intelligent. This improves user experience.

In a possible implementation, the electronic device includes a first user space and a second user space, the first user space corresponds to the first display screen, and the second user space corresponds to the second display screen.

In the foregoing method, the electronic device can manage different display screens by using different user spaces. Therefore, when a plurality of display screens share one short-range communication chip, the plurality of display screens can independently perform respective short-range communication services, thereby ensuring user experience for each display screen's user.

In a possible implementation, the electronic device is a vehicle or a vehicle-mounted device, the first display screen is a front passenger screen, and the second display screen is a rear passenger screen.

In the foregoing method, the front passenger screen and the rear passenger screen in the vehicle or the vehicle-mounted device may share one short-range communication chip, to avoid a case in which when short-range communication chips are independently configured for the front passenger screen and the rear passenger screen, some or all of the short-range communication chips are idle due to a rare scenario in which more than two persons use the short-range communication chip at the same time. This effectively improves utilization of the short-range communication chip of the vehicle or the vehicle-mounted device, and ensures user experience in the vehicle.

According to a second aspect, this application provides an electronic device, including a transceiver, a processor, and a memory, where the memory is configured to store a computer program, and the processor invokes the computer program, so that the electronic device performs the short-range communication method according to the first aspect and any one of the implementations of the first aspect.

According to a third aspect, this application provides a computer storage medium, where the computer storage medium stores a computer program, and when the computer program is executed by a processor, the processor is used to perform the short-range communication method according to the first aspect and any one of the implementations of the first aspect.

According to a fourth aspect, this application provides a computer program product, and when the computer program product runs on a device, the device is caused to perform the short-range communication method according to the first aspect and any one of the implementations of the first aspect.

According to a fifth aspect, this application provides an electronic device, where the electronic device includes the method or the apparatus for executing any aspect or any implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this application do not necessarily mean a same implementation. Further, the technical features, the technical solutions, or the beneficial effects described in embodiments of this application may be combined in any proper manner. A person skilled in the art may understand that this application may be implemented without one or more specific technical features or technical solutions, or beneficial effect in a specific implementation. In another implementation, additional technical features and beneficial effects may be further identified in a specific implementation that does not reflect all implementations.

### BRIEF DESCRIPTION OF DRAWINGS

The following describes the accompanying drawings used in this application.
FIG. 1 is a diagram of a hardware structure of an electronic device according to this application;
FIG. 2 is a diagram of another hardware structure of an electronic device according to this application;
FIG. 3 is a diagram of a software architecture of an electronic device according to this application;
FIG. 4A to FIG. 10 are diagrams of some user interfaces according to this application;
FIG. 11A and FIG. 11B are a schematic flowchart of a Bluetooth connection process according to this application;
FIG. 12A and FIG. 12B are a schematic flowchart of a binding relationship update process according to this application;
FIG. 13A and FIG. 13B are a schematic flowchart of another Bluetooth connection process according to this application;
FIG. 14A and FIG. 14B are a schematic flowchart of a Bluetooth communication process according to this application; and
FIG. 15A and FIG. 15B are a schematic flowchart of a process of deleting a Bluetooth device according to this application.

### DESCRIPTION OF EMBODIMENTS

The following describes technical solutions of embodiments in this application with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

An embodiment of this application provides a short-range communication method, applied to an electronic device. The electronic device may include M display screens (M is an integer greater than 1), the M display screens may share one short-range communication chip, and any one of the M display screens may be connected to and communicate with at least one communication device by using the short-range communication chip, to avoid the following case: When corresponding short-range communication chips are independently configured for the M display screens, some screens are connected to and communicate with the communication device by using the configured short-range communication chips (in this case, a configured Bluetooth chip is in use), and short-range communication chips configured for other screens are not used. This application can effectively improve utilization of a short-range communication chip, and reduce costs.

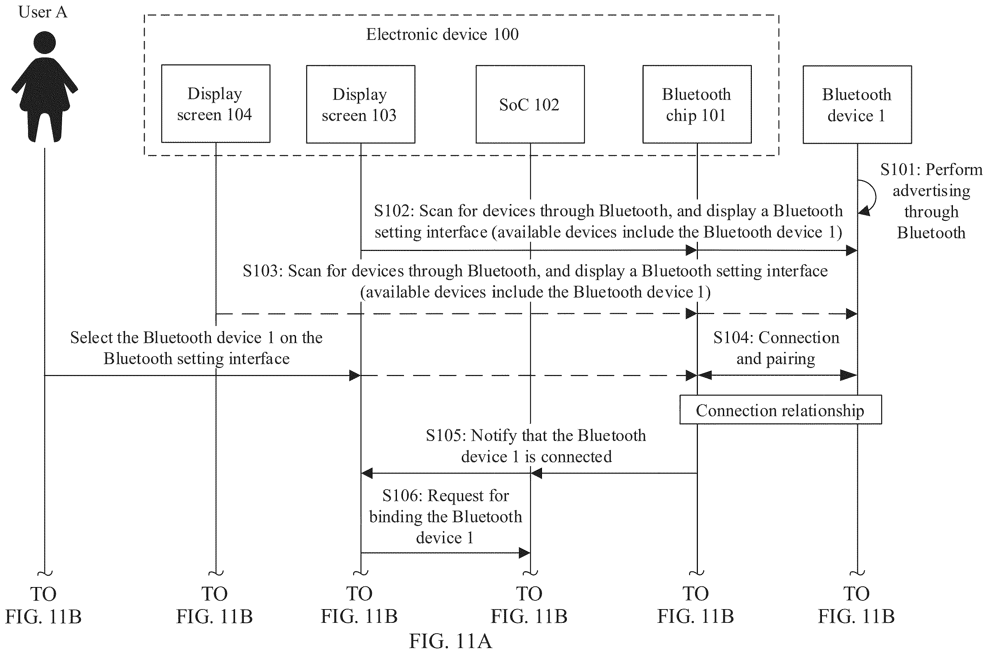

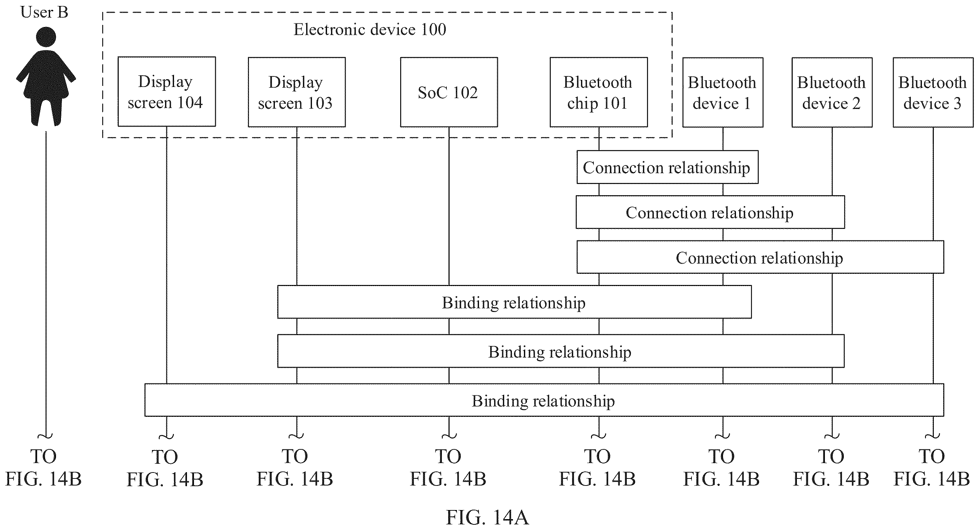

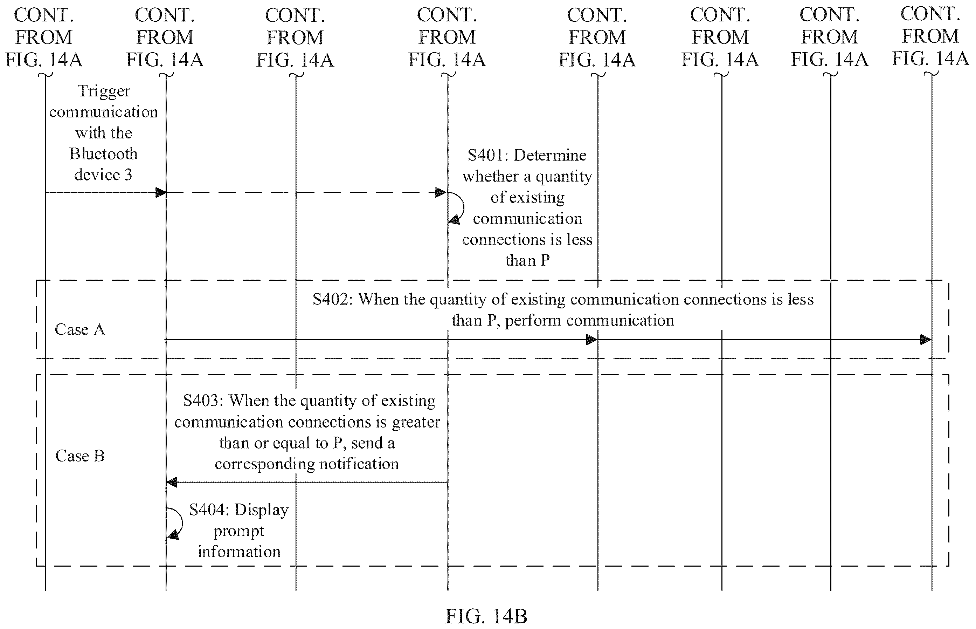

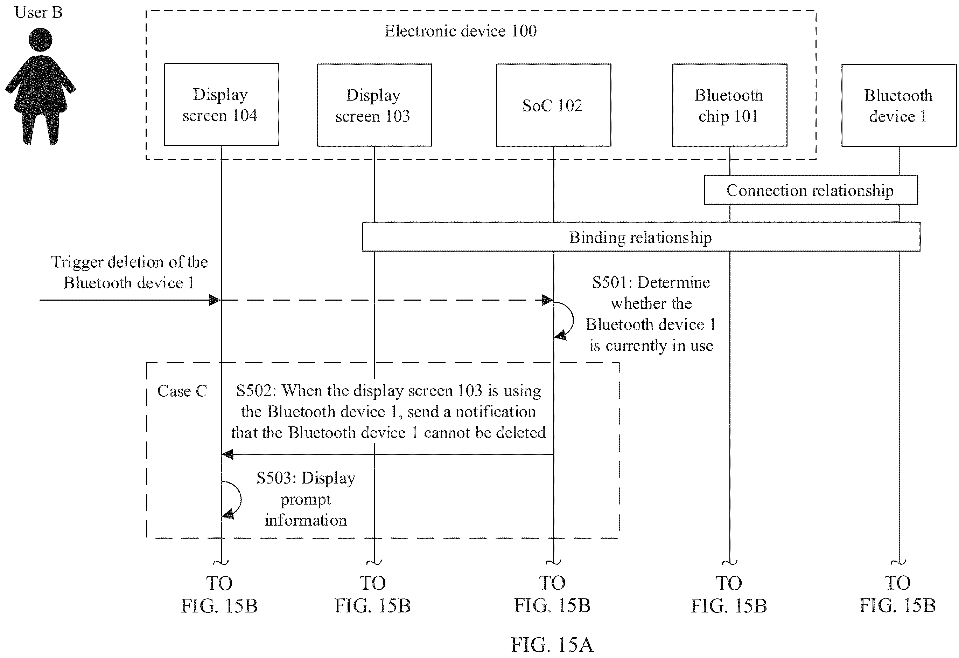

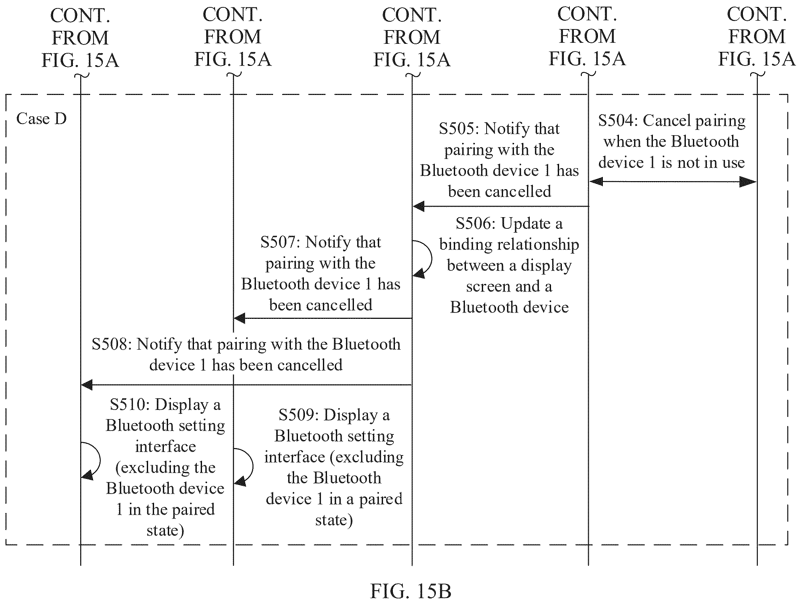

In addition, in a scenario in which the M display screens share one short-range communication chip to connect to the communication device, a corresponding processing rule may be specified in the electronic device, for example, a display rule, a rule for connecting to a communication device (which may be referred to as a connection rule for short), a rule for transmitting data with a connected communication device (which may be referred to as a communication rule for short), and a rule for deleting a communication device (which may be referred to as a deletion rule for short), to ensure that different display screens can independently implement a service (for example, outputting audio data) and do not affect each other in this scenario, and further ensure a use effect of a service on the display screen. This ensures user experience. For examples of the display rule and the connection rule, refer to FIG. 11A to FIG. 13B. For an example of the communication rule, refer to FIG. 14A and FIG. 14B. For an example of the deletion rule, refer to FIG. 15A and FIG. 15B.

The short-range communication chip in this embodiment of this application may implement a related function by using a short-range wireless communication technology. The short-range wireless communication technology may include a technology that supports short-range wireless communication. The short-range wireless communication means that two communication parties transmit information via a radio wave over a short transmission distance (for example, within one hundred meters), including but not limited to a Bluetooth technology, a wireless fidelity (Wireless Fidelity, Wi-Fi) technology, a near field communication (Near Field Communication, NFC) technology, a Wi-Fi aware (Wi-Fi Aware) technology, a universal short-range communication technology, a short-range wireless communication technology (for example, a sparklink low energy (sparklink low energy, SLE) access technology, and a sparklink basic (sparklink basic, SLB) access technology) specified by the SparkLink (sparklink) Alliance. The short-range communication chip may alternatively be named based on a short-range wireless communication technology supported by the chip. For example, a short-range communication chip that supports a Bluetooth technology may be referred to as a Bluetooth chip. For another example, a short-range communication chip that supports a short-range wireless communication technology specified by the SparkLink Alliance may be referred to as a sparklink chip. The short-range wireless communication may be widely used in various aspects such as file transfer, remote control, projection, and sensing of surrounding devices (for example, an intelligent vehicle, a smart terminal device, a smart home device, and a smart manufacturing device).

For ease of description, the following embodiments are described by using an example in which the short-range communication chip is a Bluetooth chip supporting a Bluetooth technology. In this case, a connection/communication implemented by using the short-range communication chip may also be referred to as a Bluetooth connection/Bluetooth communication, and a corresponding communication device may also be referred to as a Bluetooth device.

For example, the electronic device is a vehicle/a vehicle-mounted device. The electronic device may include a display screen for a driver, a display screen for a front passenger (which may be referred to as a front passenger screen for short), and a display screen for a rear passenger (which may be referred to as a rear passenger screen for short). The display screen for a driver includes, for example, a central control screen, an instrument screen, and augmented reality (augmented reality, AR)-head-up display (head-up display, HUD). There may be one or more rear passenger screens. Generally, a Bluetooth chip supports communication of a maximum of two channels of audio data. However, in a vehicle use scenario, the front passenger screen and the rear passenger screen are mostly used by one person or two persons at the same time (for example, audio data is output by using a connected Bluetooth device), and three or more persons rarely use the screen at the same time. If a Bluetooth chip is independently configured for each screen, a case is likely to occur in which some Bluetooth chips are idle. In this embodiment of this application, the front passenger screen and the rear passenger screen of the electronic device may share one Bluetooth chip, and use a corresponding processing rule, so that user experience in a vehicle can be ensured while utilization of the Bluetooth chip is improved.

In embodiments of this application, the electronic device may be a smart home device such as a mobile phone, a tablet computer, a handheld computer, a desktop computer, a laptop computer, an ultra-mobile personal computer (ultra-mobile personal computer, UMPC), a netbook, a personal digital assistant (personal digital assistant, PDA), a smart television, or a smart screen, an extended reality (extended reality, XR) device such as augmented reality (augmented reality, AR), virtual reality (virtual reality, VR), or mixed reality (mixed reality, MR), a vehicle or a vehicle-mounted device, a smart city device, or the like. A specific type of the electronic device is not specially limited in embodiments of this application.

In this embodiment of this application, the electronic device may be connected to another electronic device by using a Bluetooth chip. For the electronic device, the another electronic device may be referred to as a Bluetooth device. The Bluetooth device may be a device such as a headset, a microphone, smart glasses, or a game controller, and is not limited thereto. Alternatively, the Bluetooth device may be the electronic device in the foregoing example. A specific type of the Bluetooth device is not specially limited in embodiments of this application.

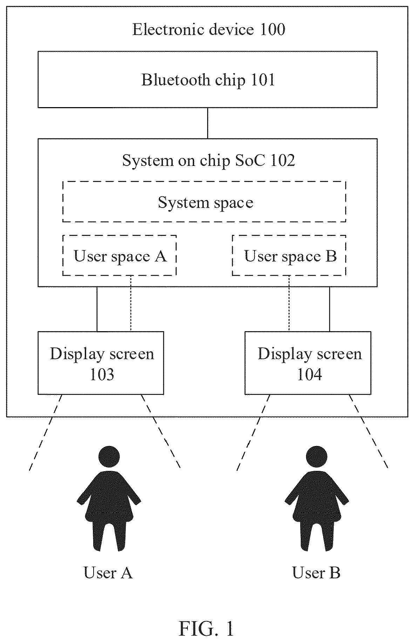

FIG. 1 is a diagram of an example of a hardware structure of an electronic device 100.

As shown in FIG. 1, the electronic device 100 may include a Bluetooth chip 101, a system on chip (system on a chip, SoC) 102, a display screen 103, and a display screen 104. The SoC 102 may be connected to the Bluetooth chip 101, the display screen 103, and the display screen 104.

The Bluetooth chip 101 may be used for short-range wireless communication. The electronic device 100 may be connected to and communicate with at least one Bluetooth device by using the Bluetooth chip 101. It may be understood that a bandwidth capability of the Bluetooth chip is limited. For ease of description, the Bluetooth chip 101 in this embodiment of this application supports a maximum of N connections (that is, the Bluetooth chip can connect to a maximum of N Bluetooth devices, which may also be referred to as a maximum quantity of supported connections being N), and supports a maximum of P communication connections/transmissions (that is, the Bluetooth chip supports simultaneous communication with a maximum of P connected Bluetooth devices, which may also be referred to as a maximum quantity of supported communication connections being P), where N and P are positive integers, P is less than or equal to N. It may be understood that, in an actual scenario, different types of services have different requirements on Bluetooth bandwidth capabilities. Therefore, when Bluetooth devices of different types of services are connected, N may be different. For example, for a Bluetooth device (for example, a Bluetooth headset or a Bluetooth sound box) for an audio play service, the Bluetooth chip 101 supports a maximum of two connections. Optionally, when the Bluetooth chip 101 has been connected to two Bluetooth devices for the audio play service, the Bluetooth chip 101 may further support a connection to at least one Bluetooth device (for example, a game controller) for a game service. Similarly, when data of different types of services is transmitted, P may be different. For example, the Bluetooth chip 101 supports transmission of a maximum of two channels of audio data. Optionally, when transmission of two channels of audio data exists in the Bluetooth chip 101, at least one channel of game instruction data may be further added for transmission. For another example, the Bluetooth chip 101 supports transmission of a maximum of one channel of call data, and the call data may be call data of a cellular call, or may be call data of a network call.

The SoC 102 may be configured to manage a binding relationship between a display screen of the electronic device 100 and a Bluetooth device. That any display screen has a binding relationship with any Bluetooth device (which may also be referred to as binding for short) may include: The electronic device 100 (including the display screen) establishes a Bluetooth connection to the Bluetooth device by using the Bluetooth chip 101 (which may also be referred to as having a connection relationship), and the display screen may communicate with the bound Bluetooth device by using the Bluetooth chip 101, to implement a service of the display screen. Binding the display screen to the Bluetooth device may also be referred to as connecting the display screen to the Bluetooth device. In the at least one Bluetooth device connected to the electronic device 100, there may be a Bluetooth device bound to the display screen 103, or there may be no Bluetooth device bound to the display screen 103, or there may be a Bluetooth device bound to the display screen 104, or there may be no Bluetooth device bound to the display screen 104. The display screen 103/display screen 104 may communicate with a bound Bluetooth device by using the Bluetooth chip 101, to implement a related service scenario. For example, the display screen 103/display screen 104 may send audio data of an audio service/call service to the bound Bluetooth device such as a headset or a sound box, to implement a service scenario in which the audio data is played by using the Bluetooth device. In this case, the display screen 103/display screen 104 may be understood as a data source, and the bound Bluetooth device is configured to receive data of the data source. For another example, the display screen 103/display screen 104 may receive game instruction data sent by the bound Bluetooth device such as a game controller, to implement a service scenario in which a game is played by using the Bluetooth device.

In some examples, the electronic device 100 is connected to two Bluetooth devices by using the Bluetooth chip 101, and the SoC 102 may manage a binding relationship between a display screen and the Bluetooth devices: The display screen 103 and the display screen 104 are separately bound to one Bluetooth device. The binding relationship poses no limitation. In some other examples, the binding relationship is that the display screen 103 is bound to the two Bluetooth devices, and in this case, there is no Bluetooth device bound to the display screen 104. In some other examples, the binding relationship is that the display screen 104 is bound to the two Bluetooth devices, and in this case, there is no Bluetooth device bound to the display screen 103.

The SoC 102 may be further configured to manage a service of the electronic device 100. The service of the electronic device 100 may include a service related to the display screen 103 (which may also be understood as a service running/displayed on the display screen 103) and a service related to the display screen 104 (which may also be understood as a service running/displayed on the display screen 104), for example, but is not limited to an audio service, a call service, or a game service.

The display screen 103/display screen 104 may be configured to provide a corresponding device function for a user. In an implementation, the display screen 103/display screen 104 may provide a corresponding device function for the user by using a connected Bluetooth device. In an implementation, the display screen 103 and the display screen 104 may respectively provide corresponding device functions for different users in different areas. In some examples, the electronic device 100 is a vehicle/vehicle-mounted device, the display screen 103 is a front passenger screen, a user in the front passenger seat may use the display screen 103, the display screen 104 is a rear passenger screen, and a user in a rear seat may use the display screen 104. For ease of description, a user of the display screen 103 is referred to as a user A, and a user of the display screen 104 is referred to as a user B.

In this embodiment of this application, when any display screen (the display screen 103 is used as an example for description) of the electronic device 100 is bound to any Bluetooth device (a Bluetooth device Z is used as an example for description), the electronic device 100 may display, on the display screen 103, the Bluetooth device Z in a paired state, and visually distinguish the Bluetooth device Z, to indicate that the display screen 103 is bound to the Bluetooth device Z. In an implementation, the electronic device 100 is further connected to another Bluetooth device (a Bluetooth device Y is used as an example for description), but the display screen 103 has no binding relationship with the Bluetooth device Y. Therefore, the display screen 103 may not display the Bluetooth device Y in a paired state, or display the Bluetooth device Y in a paired state but does not visually distinguish the Bluetooth device Y. In other words, the Bluetooth device may be visually distinguished on the display screen, to indicate that the display screen has a binding relationship with the Bluetooth device.

In an implementation, the SoC 102 may include one system space (which may also be referred to as a kernel space) and at least one user space. Different display screens of the electronic device 100 may correspond to different user spaces. For example, as shown in FIG. 1, the SoC 102 may include two user spaces: a user space A and a user space B. The display screen 103 corresponds to the user space A, and the display screen 104 corresponds to the user space B. In an implementation, when any user uses any display screen of the electronic device 100, an account corresponding to the user may be logged in/recorded on the display screen, accounts of different users may be different, and different accounts may correspond to different user spaces. For example, the user A may log in to the display screen 103 by using a registered account A, and the user B may log in to the display screen 104 by using a registered account B, where the account A corresponds to the user space A, and the account B corresponds to the user space B. For another example, when logging in to the display screen 103 for the first time, a user C may use an account C in a guest mode; and when logging in to the display screen 103 for the first time, a user D may use an account D in a guest mode, where the account C and the account D respectively correspond to a user space C and a user space D (not shown).

In an implementation, the SoC 102 may include a kernel memory (kernel memory) and a user memory (user memory). A system space may belong to the kernel memory (kernel memory), and a user space belongs to the user memory (user memory). In some examples, the SoC 102 may include a virtual address space of 4 gigabytes (gigabytes, GB). The upper 1 GB (for example, a virtual address 0xC 0000000 to 0xFFFFFFFF) in the virtual address space may be used by a kernel, and the 1 GB may serve as a kernel memory. The lower 3 GB (for example, a virtual address 0x00000000 to 0xBFFFFFFF) in the virtual address space may be used by each process, and the 3 GB may serve as a user memory. In some examples, the user memory in the SoC 102 may be divided into a plurality of storage areas, and the plurality of storage areas respectively correspond to different user spaces. For example, the SoC 102 includes the user space A and the user space B, and the user memory in the SoC may be divided into two storage areas, and the two storage areas respectively correspond to the user space A and the user space B.

It may be understood that the structure shown in FIG. 1 does not constitute a limitation on the electronic device 100. In some other embodiments, the electronic device 100 may include more or fewer components (for example, more display screens are included) than those shown in the figure, or a combination of some components (for example, the Bluetooth chip 101 may be integrated into the SoC 102), or splits from some components, or a different component layout. In some other embodiments, there may be other cases of a connection relationship between components in the electronic device 100. For example, the display screen 103 and the display screen 104 are directly connected to the Bluetooth chip 101, rather than connected to the Bluetooth chip 101 through the SoC 102. This is not limited in embodiments of this application. The components shown in FIG. 1 may be implemented by hardware, software, or a combination of software and hardware. For example, the Bluetooth chip 101 is a Bluetooth software functional module, the SoC 102 is a software processor module for a service such as an audio service or a game service, the display screen 103 is a software setting module of the display screen 103, and the display screen 104 is a software setting module of the display screen 104.

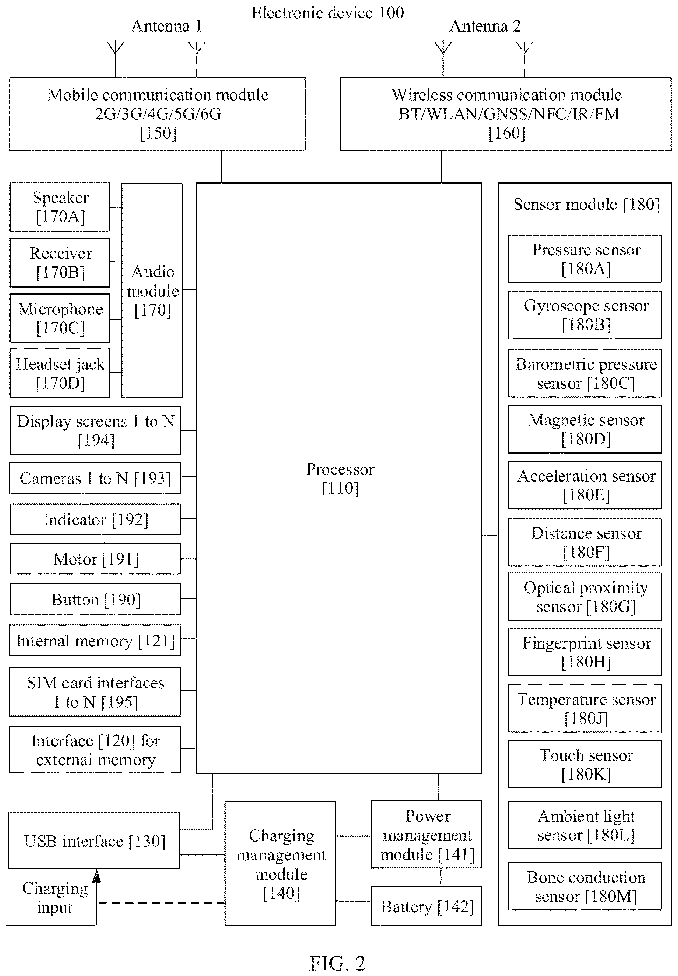

FIG. 2 is a diagram of an example of a hardware structure of an electronic device 100.

As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In an implementation, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some implementations in which the charger is a wired charger, the charging management module 140 may receive a charging input from the wired charger through the USB interface 130. In some implementations in which the charger is a wireless charger, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In another implementation, the power management module 141 may alternatively be disposed in the processor 110. In another implementation, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be used to cover one or more communication frequency bands. Different antennas may be further reused, to improve antenna utilization. For example, the antenna 1 may be reused as a diversity antenna of a wireless local area network. In another implementation, the antenna may be used in combination with a tuning switch.

The mobile communication module 150 may provide a wireless communication solution that is applied to the electronic device 100 and that includes a second generation (second generation, 2G) mobile communication technology/a third generation (third generation, 3G) mobile communication technology/a fourth generation (fourth generation, 4G) mobile communication technology/a fifth generation mobile (fifth generation, 5G) communication technology/a sixth generation (sixth generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some functional modules of the mobile communication module 150 may be disposed in the processor 110. In an implementation, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display screen 194. In an implementation, the modem processor may be an independent component. In another implementation, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute program instructions to generate or change displayed information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In an implementation, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to expand a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor. The electronic device 100 may further implement an audio function such as music playing or recording by using a connected Bluetooth device.

The audio module 170 is configured to convert digital audio information into an analog audio signal for output, and is also configured to convert an analog audio input into a digital audio signal. The audio module 170 may be further configured to: encode and decode an audio signal. In an implementation, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In another implementation, two microphones 170C may be disposed in the electronic device 100, to collect a sound signal and implement a noise reduction function. In another implementation, three, four, or more microphones 170C may alternatively be disposed in the electronic device 100, to collect a sound signal, implement noise reduction, and identify a sound source, so as to implement a directional recording function and the like.

The pressure sensor 180A is configured to sense a pressure signal, and can convert the pressure signal into an electrical signal. In an implementation, the pressure sensor 180A may be disposed on the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display screen 194, the electronic device 100 detects intensity of the touch operation through the pressure sensor 180A. The electronic device 100 may also calculate a touch location based on a detection signal of the pressure sensor 180A. In an implementation, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed.

The gyroscope sensor 180B may be configured to determine a moving posture of the electronic device 100. The barometric pressure sensor 180C is configured to measure barometric pressure. The magnetic sensor 180D includes a Hall effect sensor. The acceleration sensor 180E may detect accelerations in various directions (usually on three axes) of the electronic device 100. The distance sensor 180F is configured to measure a distance. The optical proximity sensor 180G may include, for example, a light-emitting diode (LED) and an optical detector, for example, a photodiode. The light-emitting diode may be an infrared light-emitting diode. The ambient light sensor 180L is configured to sense ambient light brightness. The fingerprint sensor 180H is configured to collect a fingerprint. The electronic device 100 may implement fingerprint unlock, application access lock, fingerprint photographing, fingerprint-based call answering, and the like by using a feature of the collected fingerprint. The temperature sensor 180J is configured to detect a temperature. The bone conduction sensor 180M may obtain a vibration signal.

The touch sensor 180K is also referred to as a "touch component". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display screen 194. In another implementation, the touch sensor 180K may alternatively be disposed on a surface of the electronic device 100 at a location different from that of the display screen 194.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The indicator 192 may be an indicator light, and may be configured to indicate a charging status and a power change, or may be configured to indicate a message, a missed call, a notification, and the like.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (harmony) operating system (operating system, OS), or another software system. In embodiments of this application, an Android system with a layered architecture is used as an example to describe a software structure of the electronic device 100.

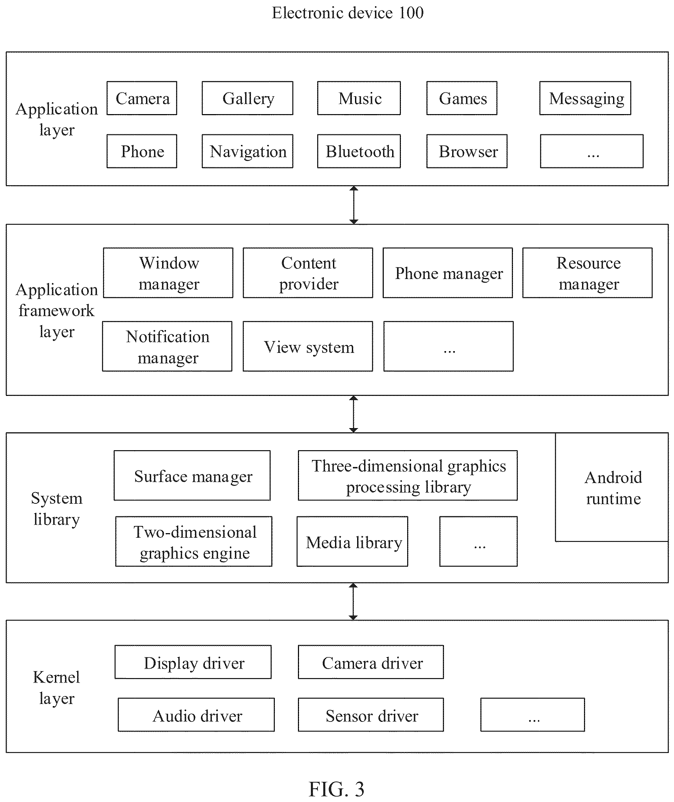

FIG. 3 is a diagram of an example of a software architecture of an electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 3, the application package may include applications such as Camera, Gallery, Music, Video, Games, Messaging, Phone, Map, Navigation, Bluetooth, and Browser. The application in this application may alternatively be replaced with other software such as an applet or an atomic service. In an implementation, the electronic device 100 may include a plurality of display screens. After an application package A is installed on any display screen, the plurality of display screens can run the application package A. In other words, the installed application package is "shared" by the plurality of display screens, and is not limited thereto. In another implementation, after an application package A is installed on any display screen, only the display screen can run the application package A, and other display screens cannot run the application package A. It may be understood as that application packages of different display screens are independent of each other, "sharing" is not performed. This is not limited in embodiments of this application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device 100 vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a workflow of software and hardware of the electronic device 100 with reference to a Bluetooth play scenario.

It is assumed that the electronic device 100 includes a display screen A and a display screen B, the electronic device 100 is connected to a Bluetooth headset through Bluetooth, the Bluetooth headset is bound to the display screen A, and the user A may wear the Bluetooth headset. When the touch sensor 180K disposed on the display screen A receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control for playing an audio application. The audio application invokes an interface of the application framework layer, and then invokes the kernel layer to send audio data to the Bluetooth headset by using the wireless communication module 160, so that the Bluetooth headset outputs the audio data.

The following describes application scenarios in embodiments of this application and examples of user interfaces in the scenarios. The following examples are described by using an example in which the electronic device 100 has the structure shown in FIG. 1, and the Bluetooth chip 101 of the electronic device 100 supports a maximum of two connections (that is, N is 2) and supports a maximum of two communication connections (that is, P is 2).

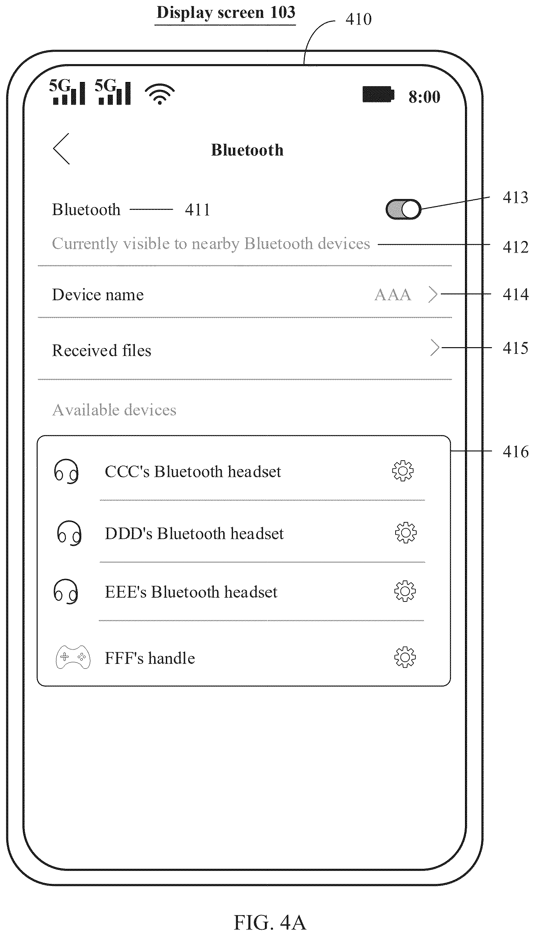

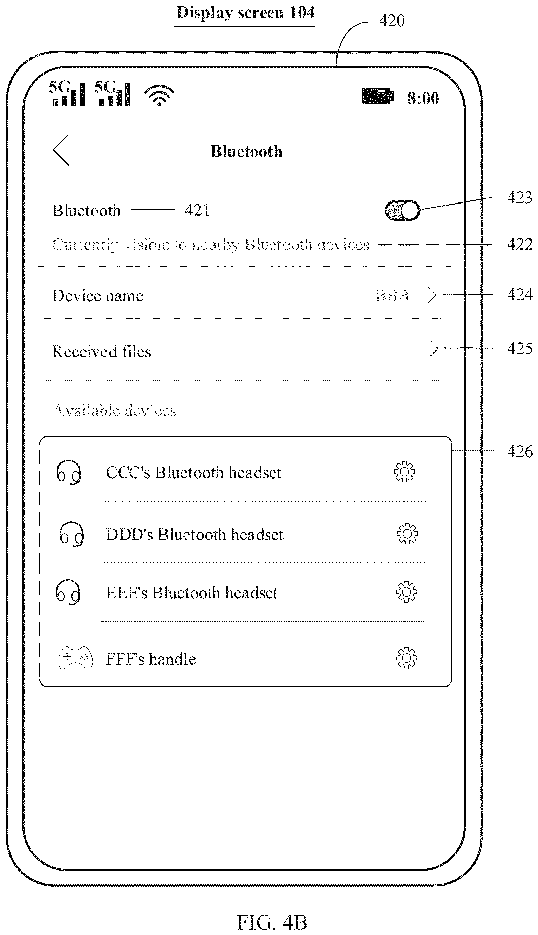

FIG. 4A and FIG. 4B are diagrams of an example of a user interface. FIG. 4A and FIG. 4B are described by using an example in which the display screen 103 and the display screen 104 enable a Bluetooth function but are not connected to a Bluetooth device.

As shown in FIG. 4A and FIG. 4B, the display screen 103 of the electronic device 100 may display a user interface 410, and the display screen 104 of the electronic device 100 may display a user interface 420. The user interface 410 may include a title "Bluetooth", which indicates that the user interface 410 is a Bluetooth function setting interface. The user interface 410 may include a function name 411 (that is, "Bluetooth"), function descriptions 412 (that is, "Currently visible to nearby Bluetooth devices"), a function switch 413 (used to trigger enabling or disabling of a Bluetooth function on the display screen 103), a device name 414 (that is, a Bluetooth name "AAA" of the display screen 103), and a file control 415 (configured to trigger viewing of a file received on the display screen 103 through Bluetooth). When the function switch 413 is in an enabled state, it indicates that the Bluetooth function on the display screen 103 is enabled. In this case, the display screen 103 may display a list 416 of available devices, and the list 416 of available devices may include information about at least one Bluetooth device found by the Bluetooth chip 101 through scanning. For example, Bluetooth devices shown in the list 416 of available devices include a Bluetooth device named "CCC's Bluetooth headset" (briefly referred to as a Bluetooth device by name in the following, and herein briefly referred to as "CCC's Bluetooth headset"), "DDD's Bluetooth headset", "EEE's Bluetooth headset", and "FFF's handle". In response to a user operation performed on any Bluetooth device in the list 416 of available devices, the electronic device 100 may connect to the Bluetooth device (including pairing with the Bluetooth device). Similar to the user interface 410, the user interface 420 also includes a function name 421 (that is, "Bluetooth"), function descriptions 422 (that is, "Currently visible to nearby Bluetooth devices"), a function switch 423 (used to trigger enabling or disabling of a Bluetooth function on the display screen 104, where the function switch is currently in an enabled state), a device name 424 (that is, a Bluetooth name "BBB" of the display screen 104), a file control 425 (configured to trigger viewing of a file received on the display screen 104 through Bluetooth), and a list 426 of available devices. Descriptions of the list 426 of available devices are similar to those of the list 416 of available devices, and details are not described again. The Bluetooth devices shown in the list 416 of available devices on the user interface 410 and the Bluetooth devices shown in the list 426 of available devices on the user interface 420 are same devices. In other words, when the display screen 103 and the display screen 104 share the Bluetooth chip 101, the display screen 103 and the display screen 104 have a same Bluetooth function.

A status (including an enabled state and a disabled state, for example, a status of the Bluetooth function on the display screen 103 is determined based on a status of the function switch 413) of a Bluetooth function on a display screen of the electronic device 100 only indicates whether the Bluetooth function on the display screen can be used, but cannot indicate a status of a Bluetooth function of the electronic device 100 (namely, a status of a Bluetooth function provided by the Bluetooth chip 101, which may also be understood as a status of the Bluetooth chip 101). For example, when the Bluetooth function on the display screen 103 is in a disabled state, the user cannot use the Bluetooth function on the display screen 103 (for example, cannot implement a connection to a Bluetooth device by using the Bluetooth chip 101), but the Bluetooth function provided by the Bluetooth chip 101 may be in an enabled state or a disabled state.

In an implementation, whether the Bluetooth chip 101 is in a working state is determined according to whether the Bluetooth function on the display screen is in the enabled state. When a Bluetooth function on at least one display screen of the electronic device 100 is in an enabled state, the Bluetooth function provided by the Bluetooth chip 101 is in the enabled state. Optionally, when Bluetooth functions on all display screens of the electronic device 100 are in a disabled state, the Bluetooth function provided by the Bluetooth chip 101 is in the disabled state. This is not limited thereto. In another implementation, the Bluetooth function provided by the Bluetooth chip 101 is always in the enabled state.

In this embodiment of this application, an example in which a Bluetooth function setting interface includes a function switch (used to trigger or disable a Bluetooth function on a current display screen) is used for description, but this should not constitute a limitation. In a specific implementation, the Bluetooth function setting interface may alternatively not include the function switch. To be specific, any display screen of the electronic device 100 may provide a manner of enabling or disabling a Bluetooth function on the display screen for the user, or may not provide the manner for the user. In some examples, the Bluetooth function provided by the Bluetooth chip 101 is always in the enabled state, the display screen of the electronic device 100 may not provide a manner of enabling or disabling a Bluetooth function on the display screen for the user. For example, in this case, the user interface 410 displayed on the display screen 103 does not include the function name 411, the function descriptions 412, and the function switch 413.

In this embodiment of this application, the Bluetooth chip 101 of the electronic device 100 supports a maximum of two connections. This may include but is not limited to the following three cases.

Case 1: The Bluetooth chip 101 supports connections to a maximum of two Bluetooth devices for an audio play service (such Bluetooth devices, for example, a Bluetooth headset or a Bluetooth sound box, are configured to output audio data).

Case 2: The Bluetooth chip 101 may support connections to two or fewer Bluetooth devices for an audio play service and to a Bluetooth device for another service, that is, a quantity of connections (that is, a quantity of connected Bluetooth devices) supported by the Bluetooth chip 101 may exceed 2. For example, the Bluetooth chip 101 may be connected to two Bluetooth headsets and one game controller. It is assumed that the display screen 103 is bound to the game controller. In this case, the display screen 103 may communicate game instruction data with the game controller, to implement an application scenario of a game service (the user may play a game on the display screen 103 by operating the game controller).

Case 3: The Bluetooth chip 101 supports connections to a maximum of two Bluetooth devices for any service.

It should be noted that, that the Bluetooth chip 101 supports a connection to a Bluetooth device means that the Bluetooth chip 101 can be connected to the Bluetooth device and the Bluetooth device is available. A case in which the Bluetooth chip 101 can be connected to a Bluetooth device but the Bluetooth device is unavailable does not belong to a scope of supporting a connection.

In this embodiment of this application, before connecting to a Bluetooth device A, the electronic device 100 may determine, based on a capability of the Bluetooth chip 101 (for example, the foregoing three cases), a service type of the to-be-connected Bluetooth device A, and a quantity and a service type of Bluetooth devices currently connected to the Bluetooth chip 101, whether the Bluetooth chip 101 supports a connection to the Bluetooth device A. If a determining result indicates that the Bluetooth chip 101 supports the connection to the Bluetooth device A, the Bluetooth chip 101 may establish the connection to the Bluetooth device A, for example, the following scenario 1, scenario 2, scenario 3, scenario 4, and scenario 5. For an example of a scenario in which a determining result indicates that the Bluetooth chip 101 does not support the connection to the Bluetooth device A, refer to the following scenario 6, scenario 7, scenario 8, and scenario 9.

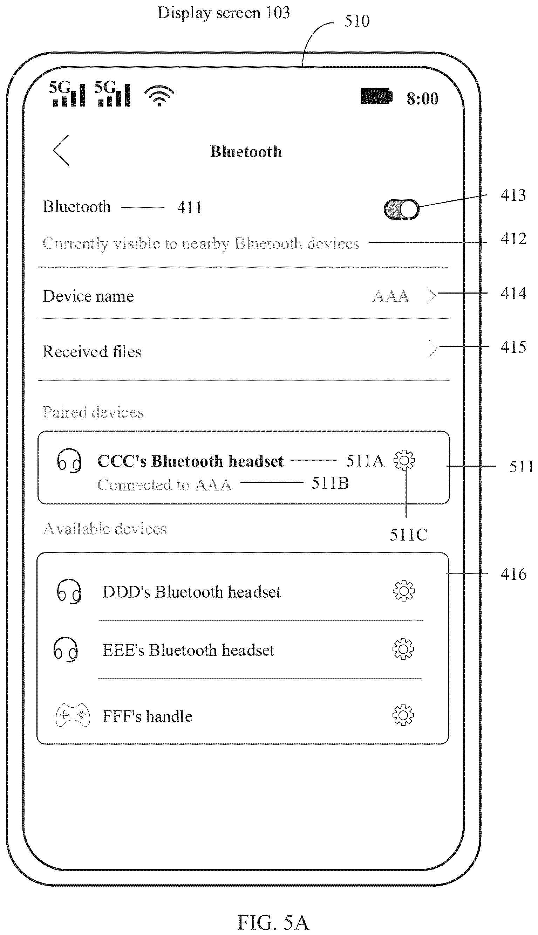

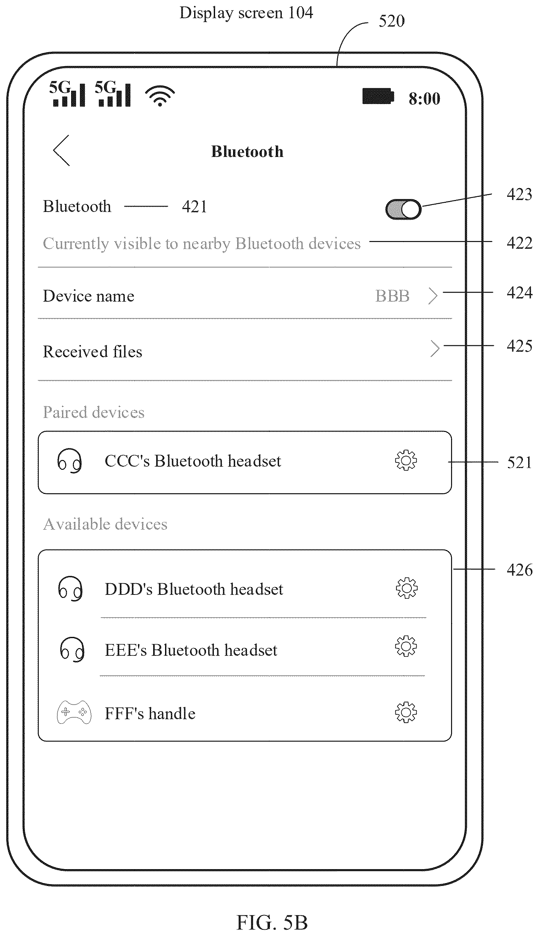

Scenario 1: After the Bluetooth function on the display screen 103 is enabled (for example, after the implementation shown in FIG. 4A), the electronic device 100 may receive a user operation performed on a Bluetooth device 1 shown on the display screen 103 (for example, a touch operation performed on the Bluetooth device 1 in the list 416 of available devices on the user interface 410 shown in FIG. 4A). Because the Bluetooth chip 101 is not currently connected to any Bluetooth device (in this case, the Bluetooth chip 101 is capable of connecting to a new Bluetooth device), in response to the user operation, the electronic device 100 may establish a connection to the Bluetooth device 1 by using the Bluetooth chip 101, and determines that the Bluetooth device 1 has a binding relationship with the display screen 103. In this case, the display screen 103 and the display screen 104 may display information about the Bluetooth device 1. For a specific example, refer to FIG. 5A and FIG. 5B below.

FIG. 5A and FIG. 5B are diagrams of an example of another user interface. FIG. 5A and FIG. 5B are described by using an example in which the display screen 103 is bound to the Bluetooth device 1, the display screen 104 is not bound to a Bluetooth device, and the Bluetooth device 1 is "CCC's Bluetooth headset".

As shown in FIG. 5A and FIG. 5B, the display screen 103 of the electronic device 100 may display a user interface 510, and the display screen 104 of the electronic device 100 may display a user interface 520. The user interface 510 is similar to the user interface 410 shown in FIG. 4A, and is different from the user interface 410 as follows: The user interface 510 further includes a list of paired devices. The list of paired devices may include information about a Bluetooth device that has a Bluetooth pairing relationship with the electronic device 100 (which may be subsequently referred to as a paired device of the electronic device 100 for short), for example, information 511 about the Bluetooth device 1 (namely, "CCC's Bluetooth headset"), and the list 416 of available devices on the user interface 510 does not include the information about the Bluetooth device 1. A device name 511A "CCC's Bluetooth headset" shown in the information 511 is visually distinguished (for example, displayed in bold), and the information 511 further includes prompt information 511B ("Connected to AAA"), indicating that the display screen 103 has a binding relationship with "CCC's Bluetooth headset". When the display screen 103 is bound to "CCC's Bluetooth headset", the display screen 103 may communicate with "CCC's Bluetooth headset" by using the Bluetooth chip 101. For example, the display screen 103 may serve as a data source and send audio data to "CCC's Bluetooth headset", to output the audio data of the display screen 103 by using "CCC's Bluetooth headset". The user interface 520 is similar to the user interface 420 shown in FIG. 4B, and is different from the user interface 420 as follows: The user interface 520 further includes a list of paired devices. The list of paired devices includes, for example, information 521 about the Bluetooth device 1 (namely, "CCC's Bluetooth headset"), and the list 426 of available devices on the user interface 520 does not include the information about the Bluetooth device 1. A device name "CCC's Bluetooth headset" shown in the information 521 is not visually distinguished (for example, not displayed in bold), indicating that the display screen 104 has no binding relationship with "CCC's Bluetooth headset". Information about any Bluetooth device in the lists of paired devices displayed on the display screen 103 and the display screen 104 may include a setting option of the Bluetooth device. For example, the information 511 about the Bluetooth device 1 on the user interface 510 includes a setting option 511C, and the setting option 511C may be used to trigger display of a setting interface of "CCC's Bluetooth headset". It can be learned from FIG. 5A and FIG. 5B that a Bluetooth connection (including a Bluetooth pairing relationship) is established between the electronic device 100 and the Bluetooth device 1. The display screen 103 is currently bound to the Bluetooth device 1, and the display screen 104 is not currently bound to a Bluetooth device.

In this embodiment of this application, paired devices of the electronic device 100 may include a device that currently establishes a Bluetooth connection to the electronic device 100, or may include a device that once established a Bluetooth connection to the electronic device 100. The electronic device 100 may find a paired device through scanning, or may not find a paired device through scanning. The electronic device 100 may be connected to the paired device, or may not be connected to the paired device. For example, when the paired device is a device that once established a Bluetooth connection to the electronic device 100, the electronic device 100 may not find the paired device through scanning, and may not be connected to the paired device. The electronic device 100 may store information about the paired device, for example, a Bluetooth address or a Bluetooth name.

FIG. 5A and FIG. 5B are illustrated by using an example in which a visually distinguished manner is displaying in bold, but this does not constitute a limitation. "Visually distinguished" in this embodiment of this application may include, but is not limited to, at least one of the following: highlighting, displaying in bold, displaying in italics, underlining, a background shade, a border such as a circle or a rectangle around characters, a font color different from that of another text, a font type different from that of another text (for example, the regular script and the Song typeface belong to different font families), and a font size different from that of another text, and the like.

A display manner shown in FIG. 5A and FIG. 5B poses no limitation. In another implementation, the prompt information 511B displayed on the display screen 103 may also be "Bound to AAA". Specific content of prompt information indicating that a display screen is bound to a Bluetooth device is not limited in embodiments of this application. In another implementation, alternatively, the prompt information 511B displayed on the display screen 103 may not include a device name "AAA" of the display screen 103, that is, the prompt information 511B does not indicate a binding relationship between a display screen and a Bluetooth device, but only indicate that "CCC's Bluetooth headset" is connected to the electronic device 100, for example, "Connected". Specific content of prompt information indicating that the electronic device is connected to a Bluetooth device is not limited in embodiments of this application. In another implementation, alternatively, the information 521 displayed on the display screen 104 may include prompt information. Descriptions of the prompt information are similar to those of the prompt information 511B. For example, the prompt information is "Connected" or "Connected to AAA". The prompt information may be the same as or different from the prompt information 511B. For example, the prompt information is "Connected", and the prompt information 511B is "Connected to AAA". In another implementation, the list of paired devices on the display screen 104 may not include "CCC's Bluetooth headset", that is, a display screen that has no binding relationship with a Bluetooth device may not display the Bluetooth device in the list of paired devices.

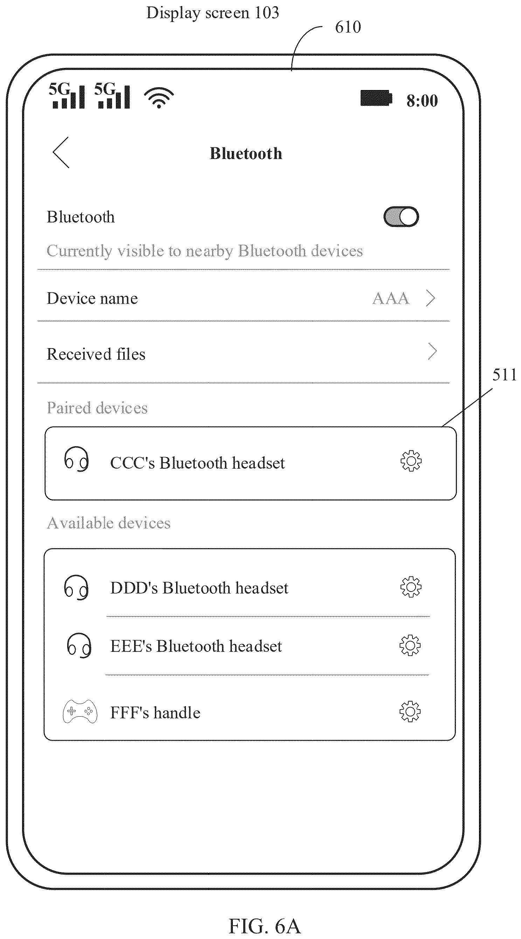

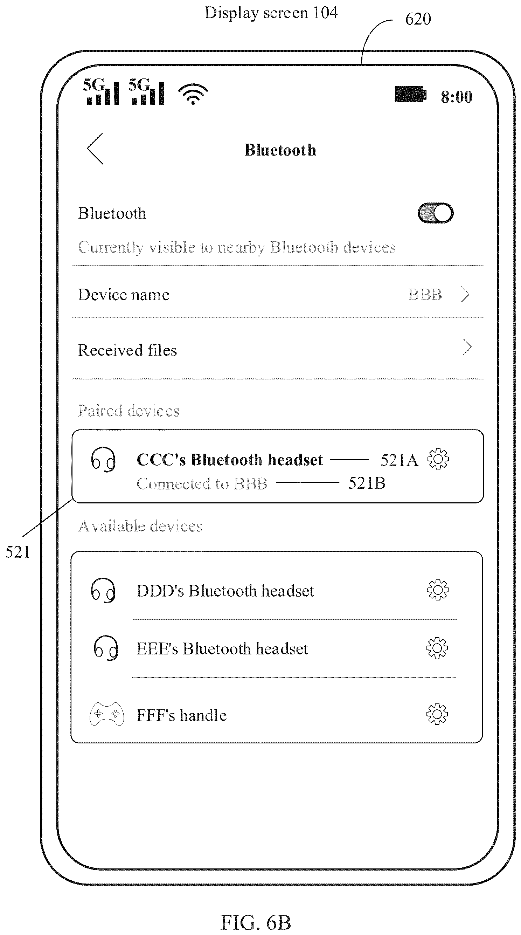

Scenario 2: After the display screen 103 of the electronic device 100 is bound to a Bluetooth device 1 (for example, after the implementation shown in FIG. 5A), the electronic device 100 may receive a user operation performed on the Bluetooth device 1 shown on the display screen 104 (for example, a touch operation performed on the information 521 on the user interface 520 shown in FIG. 5B), cancel a binding relationship between the display screen 103 and the Bluetooth device 1 in response to the user operation, and determine that the display screen 104 has a binding relationship with the Bluetooth device 1. In this case, a manner in which the display screen 103 and the display screen 104 display the Bluetooth device 1 changes. For a specific example, refer to FIG. 6A and FIG. 6B.

FIG. 6A and FIG. 6B are diagrams of an example of another user interface. FIG. 6A and FIG. 6B are described by using an example in which the display screen 104 is bound to the Bluetooth device 1, the display screen 103 is not bound to a Bluetooth device, and the Bluetooth device 1 is "CCC's Bluetooth headset".

As shown in FIG. 6A and FIG. 6B, the display screen 103 of the electronic device 100 may display a user interface 610, and the display screen 104 of the electronic device 100 may display a user interface 620. The user interface 610 is similar to the user interface 510 shown in FIG. 5A, and is different from the user interface 510 as follows: A display manner of the information 511 about the Bluetooth device 1 in a list of paired device is different. In the list of paired device on the user interface 610, a device name "CCC's Bluetooth headset" in the information 511 about the Bluetooth device 1 is not visually distinguished, and the information 511 does not include prompt information, indicating that the display screen 103 has no binding relationship with "CCC's Bluetooth headset". The user interface 620 is similar to the user interface 520 shown in FIG. 5B, and is different from the user interface 520 as follows: A display manner of the information 521 about the Bluetooth device 1 in the list of paired device is different. In a list of paired device on the user interface 620, a device name 521A "CCC's Bluetooth headset" in the information 521 about the Bluetooth device 1 is visually distinguished, and the information 521 includes prompt information 521B "Connected to BBB", indicating that the display screen 104 has a binding relationship with "CCC's Bluetooth headset". When the display screen 104 is bound to "CCC's Bluetooth headset", the display screen 104 may communicate with "CCC's Bluetooth headset" by using the Bluetooth chip 101. It can be learned from FIG. 6A and FIG. 6B that a Bluetooth connection (including a Bluetooth pairing relationship) is established between the electronic device 100 and the Bluetooth device 1. The display screen 103 is not currently bound to a Bluetooth device, and the display screen 104 is currently bound to the Bluetooth device 1.

The implementation shown in FIG. 6A and FIG. 6B poses no limitation. In another implementation, the electronic device 100 may determine, in response to the user operation performed on the Bluetooth device 1 shown on the display screen 104, whether the display screen 103 is using the Bluetooth device 1 (that is, the display screen 103 is communicating with the Bluetooth device 1 by using the Bluetooth chip 101). When a determining result indicates that the display screen 103 is using the Bluetooth device 1, the electronic device 100 may maintain the binding relationship between the display screen 103 and the Bluetooth device 1. Optionally, in this case, the display screen 104 may display prompt information (for example, "The Bluetooth device 1 is being used by another display screen and cannot be connected"). When a determining result indicates that the display screen 103 is not using the Bluetooth device 1, the electronic device 100 may cancel the binding relationship between the display screen 103 and the Bluetooth device 1, and determine that the display screen 104 has the binding relationship with the Bluetooth device 1.

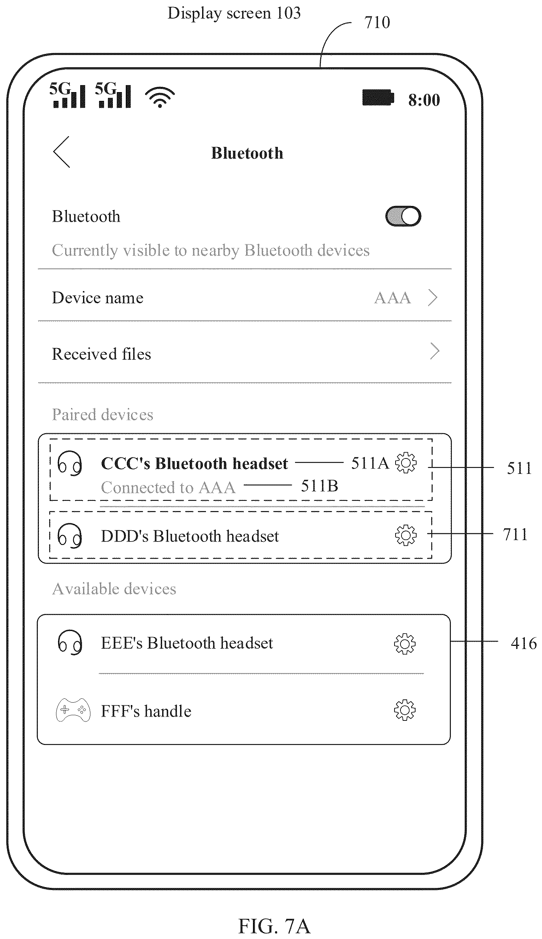

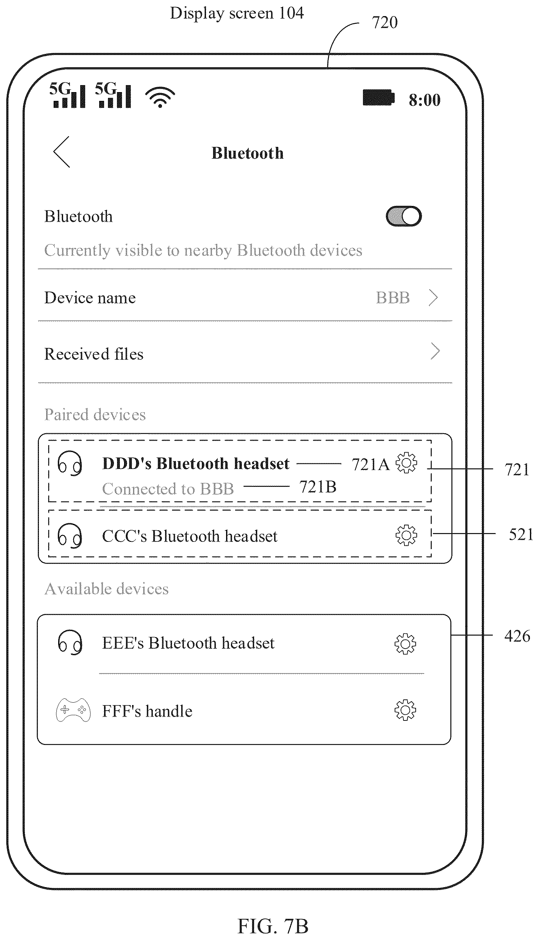

Scenario 3: After the display screen 103 of the electronic device 100 is bound to the Bluetooth device 1 (for example, after the implementation shown in FIG. 5A), the electronic device 100 may receive a user operation performed on a Bluetooth device 2 (corresponding to an audio service) shown on the display screen 104 (for example, a touch operation performed on the Bluetooth device 2 in the list 426 of available devices on the user interface 520 shown in FIG. 5B). Because the Bluetooth chip 101 is currently connected to only one Bluetooth device 1, in response to the user operation, the electronic device 100 may establish a connection to the Bluetooth device 2 by using the Bluetooth chip 101, and determine that the Bluetooth device 2 has a binding relationship with the display screen 104. In this case, both the display screen 103 and the display screen 104 may display information about the Bluetooth device 2. For a specific example, refer to FIG. 7A and FIG. 7B.

FIG. 7A and FIG. 7B are diagrams of an example of another user interface. FIG. 7A and FIG. 7B are described by using an example in which the display screen 103 is bound to the Bluetooth device 1, the display screen 104 is bound to the Bluetooth device 2, the Bluetooth device 1 is "CCC's Bluetooth headset", and the Bluetooth device 2 is "DDD's Bluetooth headset".

As shown in FIG. 7A and FIG. 7B, the display screen 103 of the electronic device 100 may display a user interface 710, and the display screen 104 of the electronic device 100 may display a user interface 720. The user interface 710 is similar to the user interface 510 shown in FIG. 5A, and both indicate that the display screen 103 has a binding relationship with "CCC's Bluetooth headset". The user interface 710 is different from the user interface 510 as follows: A list of paired devices on the user interface 710 further includes information 711 about the Bluetooth device 2 (namely, "DDD's Bluetooth headset"), and the list 416 of available devices on the user interface 710 does not include the information about the Bluetooth device 2. A device name "DDD's Bluetooth headset" in the information 711 is not visually distinguished, and the information 711 does not include prompt information, which indicates that the display screen 103 has no binding relationship with "DDD's Bluetooth headset". The user interface 720 is similar to the user interface 520 shown in FIG. 5B, and both indicate that the display screen 104 has no binding relationship with "CCC's Bluetooth headset". The user interface 720 is different from the user interface 520 as follows: A list of paired devices on the user interface 720 further includes information 721 about the Bluetooth device 2 (namely, "DDD's Bluetooth headset"), and the list 426 of available devices on the user interface 720 does not include the information about the Bluetooth device 2. A device name 721A "DDD's Bluetooth headset" in the information 721 is visually distinguished (for example, displayed in bold), and the information 721 further includes prompt information 721B ("Connected to BBB"), indicating that the display screen 104 has a binding relationship with "DDD's Bluetooth headset". When the display screen 104 is bound to "DDD's Bluetooth headset", the display screen 104 may communicate with "DDD's Bluetooth headset" by using the Bluetooth chip 101. It can be learned from FIG. 7A and FIG. 7B that the electronic device 100 establishes Bluetooth connections (including a Bluetooth pairing relationship) to the Bluetooth device 1 and the Bluetooth device 2, the display screen 103 is currently bound to the Bluetooth device 1, and the display screen 104 is currently bound to the Bluetooth device 2. A current scenario may be understood as a scenario of "one screen with one connection + one screen with one connection".

In the scenario shown in FIG. 7A and FIG. 7B, the display screen 103 may communicate with the bound Bluetooth device 1 by using the Bluetooth chip 101, and the display screen 104 may communicate with the bound Bluetooth device 2 by using the Bluetooth chip 101. For example, the display screen 103 may output audio data by using the bound Bluetooth device 1, and the display screen 104 may output audio data by using the bound Bluetooth device 2. The two channels of audio data belong to different data sources (that is, the display screen 103 and the display screen 104). In this case, the Bluetooth chip 101 maintains two communication connections, and a current scenario may be understood as a scenario of "one screen with one communication connection + one screen with one communication connection". For the two channels of communication data, different encoding modes or a same encoding mode may be used.

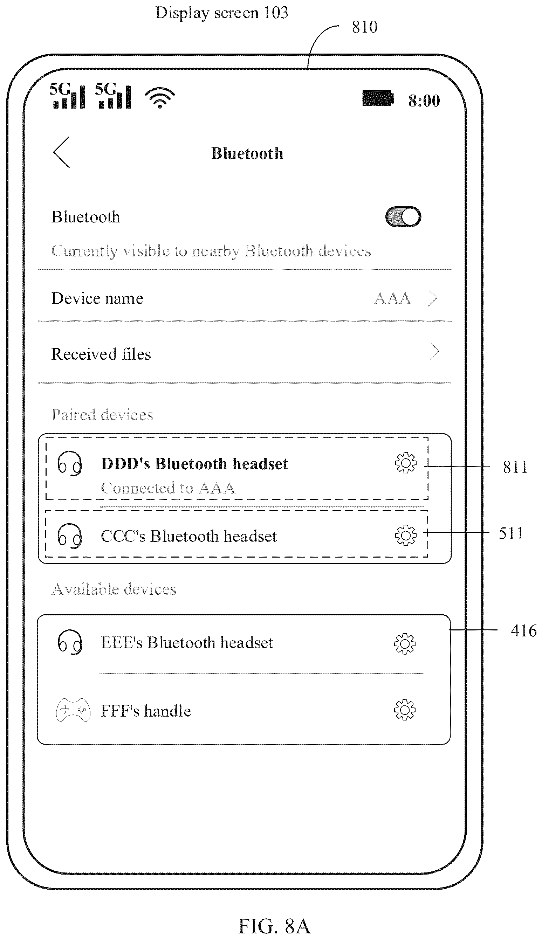

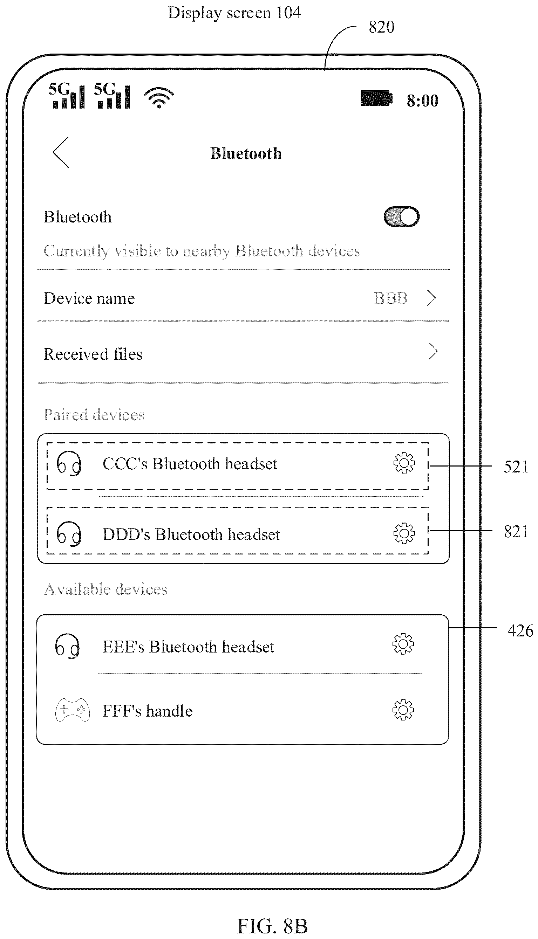

Scenario 4: After the display screen 103 of the electronic device 100 is bound to a Bluetooth device 1 (for example, after the implementation shown in FIG. 5A), the electronic device 100 may receive a user operation performed on a Bluetooth device 2 shown on the display screen 103 (for example, a touch operation performed on the Bluetooth device 2 in the list 416 of available devices on the user interface 510 shown in FIG. 5A), and cancel a binding relationship between the display screen 103 and the Bluetooth device 1 in response to the user operation (optionally, the electronic device 100 cancels a Bluetooth connection to the Bluetooth device 1). In addition, the electronic device 100 may establish a connection to the Bluetooth device 2 by using the Bluetooth chip 101, and determine that the Bluetooth device 2 has a binding relationship with the display screen 103. In this case, both the display screen 103 and the display screen 104 may display information about the Bluetooth device 2. For a specific example, refer to FIG. 8A and FIG. 8B.

FIG. 8A and FIG. 8B are diagrams of an example of another user interface. FIG. 8A and FIG. 8B are described by using an example in which paired devices of the electronic device 100 include the Bluetooth device 1 and the Bluetooth device 2, the display screen 103 is bound to the Bluetooth device 2 but is not bound to the Bluetooth device 1, the display screen 104 is not bound to a Bluetooth device, the Bluetooth device 1 is "CCC's Bluetooth headset", and the Bluetooth device 2 is "DDD's Bluetooth headset".

As shown in FIG. 8A and FIG. 8B, the display screen 103 of the electronic device 100 may display a user interface 810, and the display screen 104 of the electronic device 100 may display a user interface 820. The user interface 810 is similar to the user interface 510 shown in FIG. 5A, and is different from the user interface 510 as follows: A display manner of the information 511 about the Bluetooth device 1 in the list of paired devices is different, and a list of paired devices on the user interface 810 further includes information 811 about the Bluetooth device 2. For descriptions of the information 511 on the user interface 810, refer to descriptions of the information 511 on the user interface 610 shown in FIG. 6A, indicating that the display screen 103 has no binding relationship with "CCC's Bluetooth headset". A device name "DDD's Bluetooth headset" in the information 811 about the Bluetooth device 2 is visually distinguished, and the information 811 includes prompt information "Connected to AAA", indicating that the display screen 103 has a binding relationship with "DDD's Bluetooth headset". When the display screen 103 is bound to "DDD's Bluetooth headset", the display screen 103 may communicate with "DDD's Bluetooth headset" by using the Bluetooth chip 101. The user interface 820 is similar to the user interface 520 shown in FIG. 5B, and both indicate that the display screen 104 has no binding relationship with "CCC's Bluetooth headset". The user interface 820 is different from the user interface 520 as follows: A list of paired device on the user interface 820 further includes information 821 about the Bluetooth device 2, a device name "DDD's Bluetooth headset" in the information 821 is not visually distinguished, and the information 821 does not include prompt information, indicating that the display screen 104 has no binding relationship with "DDD's Bluetooth headset". It can be learned from FIG. 8A and FIG. 8B that the electronic device 100 is paired with but not connected to the Bluetooth device 1, and the electronic device 100 is paired with and connected to the Bluetooth device 2. The display screen 103 is currently bound to the Bluetooth device 2, and the display screen 104 is not currently bound to a Bluetooth device. A current scenario may be understood as a scenario of "one screen with one connection + one screen with 0 connections".

It can be learned from descriptions in FIG. 8A and FIG. 8B that the display screen 103 can be bound to only one Bluetooth device of an audio service at a time. Therefore, when the display screen 103 is connected to the Bluetooth device 1 (that is, the scenario shown in FIG. 5A), if the electronic device 100 receives a user operation used to connect the display screen 103 to the Bluetooth device 2, the electronic device 100 may cancel an original binding relationship between the display screen 103 and the Bluetooth device 1, and establish a new binding relationship for the display screen 103, namely, a binding relationship between the display screen 103 and the Bluetooth device 2.

The implementation shown in FIG. 8A and FIG. 8B poses no limitation. In another implementation, after the display screen 103 is bound to the Bluetooth device 1, the electronic device 100 may display prompt information in response to the user operation performed on the Bluetooth device 2 shown on the display screen 103, where the prompt information indicates that the display screen 103 cannot be bound to the new Bluetooth device 2.

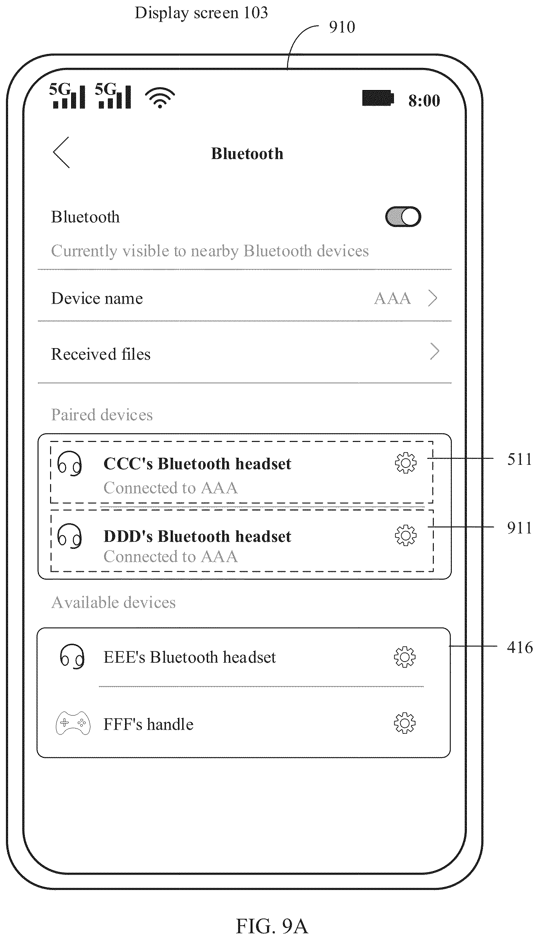

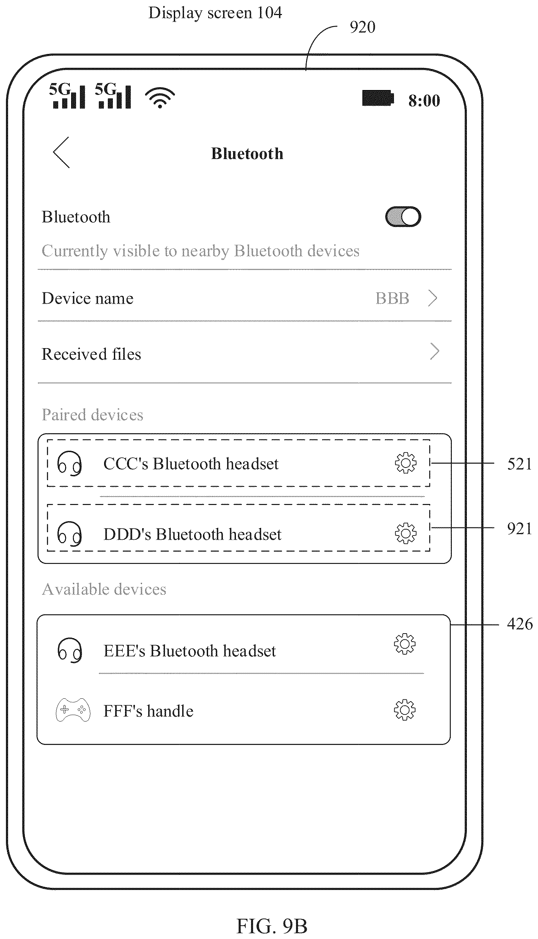

The implementation shown in FIG. 8A and FIG. 8B poses no limitation. In another implementation, it is assumed that a capability of the Bluetooth chip 101 belongs to the case 3. After the display screen 103 is bound to the Bluetooth device 1, the electronic device 100 may determine, in response to the user operation performed on the Bluetooth device 2 shown on the display screen 103, whether a quantity of Bluetooth devices currently connected to the Bluetooth chip 101 is less than N (that is, 2). Because a current determining result indicates that the quantity of Bluetooth devices currently connected to the Bluetooth chip 101 is less than N, the electronic device 100 may establish the connection to the Bluetooth device 2 by using the Bluetooth chip 101, and determine that the Bluetooth device 2 has a binding relationship with the display screen 103, and the electronic device 100 does not cancel the binding relationship between the display screen 103 and the Bluetooth device 1. That is, in this case, the display screen 103 is bound to the two Bluetooth devices. For a specific example, refer to FIG. 9A and FIG. 9B.

FIG. 9A and FIG. 9B are diagrams of an example of another user interface. FIG. 9A and FIG. 9B are described by using an example in which paired devices of the electronic device 100 include the Bluetooth device 1 and the Bluetooth device 2, the display screen 103 is bound to the Bluetooth device 1 and the Bluetooth device 2, the display screen 104 is not bound to a Bluetooth device, the Bluetooth device 1 is "CCC's Bluetooth headset", and the Bluetooth device 2 is "DDD's Bluetooth headset".

As shown in FIG. 9A and FIG. 9B, the display screen 103 of the electronic device 100 may display a user interface 910, and the display screen 104 of the electronic device 100 may display a user interface 920. The user interface 910 is similar to the user interface 510 shown in FIG. 5A, and both indicate that the display screen 103 has a binding relationship with "CCC's Bluetooth headset". The user interface 910 is different from the user interface 510 as follows: A list of paired devices on the user interface 910 further includes information 911 about the Bluetooth device 2. For descriptions of the information 911, refer to descriptions of the information 811 on the user interface 810 shown in FIG. 8A, indicating that the display screen 103 has a binding relationship with "DDD's Bluetooth headset". The user interface 920 is similar to the user interface 520 shown in FIG. 5B, and both indicate that the display screen 104 has no binding relationship with "CCC's Bluetooth headset". The user interface 920 is different from the user interface 520 as follows: A list of paired devices on the user interface 820 further includes information 921 about the Bluetooth device 2. For descriptions of the information 921, refer to descriptions of the information 821 on the user interface 820 shown in FIG. 8B, indicating that the display screen 104 has no binding relationship with "DDD's Bluetooth headset". It can be learned from FIG. 9A and FIG. 9B that the electronic device 100 is connected to and paired with the Bluetooth device 1 and the Bluetooth device. The display screen 103 is currently bound to the Bluetooth device 1 and the Bluetooth device 2, and the display screen 104 is not currently bound to a Bluetooth device. A current scenario may be understood as a scenario of "one screen with two connections + one screen with 0 connections".

In an implementation, in the scenario shown in FIG. 9A and FIG. 9B, the display screen 103 is bound to the two Bluetooth devices, and in response to the user operation, the display screen 103 may select a Bluetooth device from the two Bluetooth devices for communication. In some examples, the display screen 103 may display information about the Bluetooth device 1 and the Bluetooth device 2. When the user selects the Bluetooth device 1 on the display screen 103, the display screen 103 may communicate with the Bluetooth device 1 by using the Bluetooth chip 101. When the user selects the Bluetooth device 2 on the display screen 103, the display screen 103 may communicate with the Bluetooth device 2 by using the Bluetooth chip 101. When the user selects the Bluetooth device 1 and the Bluetooth device 2 on the display screen 103, the display screen 103 may display prompt information (for example, "Whether to allow communication with two Bluetooth devices at the same time"). In response to a user operation performed on the prompt information, the display screen 103 may communicate with the Bluetooth device 1 and the Bluetooth device 2 by using the Bluetooth chip 101. In this case, the Bluetooth chip 101 maintains two communication connections. A current scenario may be understood as a scenario of "one screen with two communication connections + one screen with 0 communication connections".

FIG. 9A and FIG. 9B are illustrated by using an example in which the display screen 103 may be simultaneously bound to two Bluetooth devices. In some other examples, the display screen 103 may alternatively be simultaneously bound to three or more Bluetooth devices. However, it should be noted that a quantity of Bluetooth devices bound to the display screen 103 and the display screen 104 needs to be less than or equal to a maximum quantity of connections N supported by the Bluetooth chip 101.

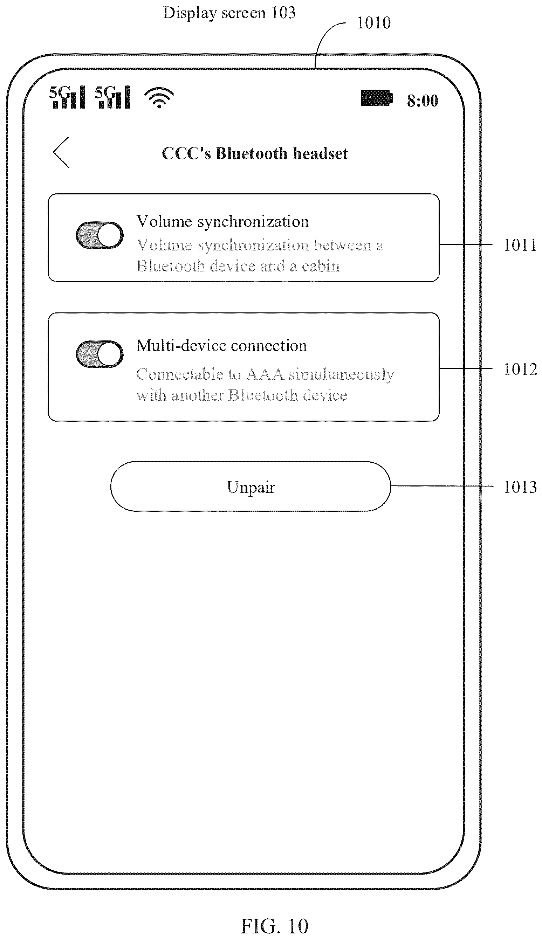

In an implementation, in response to a user operation performed on a setting interface of the display screen 103, the electronic device 100 may enable a function of simultaneously binding a plurality of Bluetooth devices to the display screen 103. For an example of a scenario after the function is enabled, refer to FIG. 9A and FIG. 9B. For an example of the setting interface, refer to FIG. 10.

FIG. 10 is a diagram of an example of another user interface.

As shown in FIG. 10, the display screen 103 of the electronic device 100 may display a user interface 1010. In some examples, the user interface 1010 may be displayed by the electronic device 100 in response to a user operation performed on the setting option 511C on the user interface 510 shown in FIG. 5A. The user interface 1010 may include a title "CCC's Bluetooth headset", which indicates that the user interface 1010 is a setting interface of "CCC's Bluetooth headset". The user interface 1010 may include setting information 1011 of a "Volume synchronization" function, setting information 1012 of a "Multi-device connection" function, and an option 1013 of "Unpair". The setting information 1011 may include descriptions of the "Volume synchronization" function ("Volume synchronization between a Bluetooth device and a cabin") and a switch control (configured to enable or disable the "Volume synchronization" function). The setting information 1012 may include descriptions of the "Multi-device connection" function ("Connectable to AAA and another Bluetooth device simultaneously") and a switch control (configured to enable or disable the "Multi-device connection" function). In some examples, after the "Multi-device connection" function is enabled, "CCC's Bluetooth headset" and the another Bluetooth device may be simultaneously bound to a display screen. For a scenario example, refer to FIG. 9A and FIG. 9B. The option 1013 is used to trigger cancellation of a Bluetooth pairing relationship between the electronic device 100 and "CCC's Bluetooth headset".

In some other examples, when the "Multi-device connection" function of "CCC's Bluetooth headset" is not enabled, "CCC's Bluetooth headset" cannot be simultaneously bound to the display screen 103 and another Bluetooth device. For an example of a scenario, refer to descriptions of FIG. 8A and FIG. 8B and descriptions of the foregoing display prompt information (the prompt information indicates that the display screen 103 cannot be bound to the new Bluetooth device 2).

The foregoing implementations pose no limitation. In another implementation, regardless of whether the "Multi-device connection" function of "CCC's Bluetooth headset" is enabled, "CCC's Bluetooth headset" may be simultaneously bound to the display screen 103 and another Bluetooth device. Correspondingly, the display screen 103 may be bound to a plurality of Bluetooth devices. However, when the "Multi-device connection" function of "CCC's Bluetooth headset" is not enabled, the display screen 103 needs to be simultaneously bound to "CCC's Bluetooth headset" and another Bluetooth device after confirmation of the user; and when the "Multi-device connection" function of "CCC's Bluetooth headset" is enabled, the display screen 103 may be simultaneously bound to a plurality of Bluetooth devices (including "CCC's Bluetooth headset") without confirmation of the user. In some examples, it is assumed that the "Multi-device connection" function of the Bluetooth device 1 is not enabled. After the display screen 103 is bound to the Bluetooth device 1, the electronic device 100 may display prompt information (for example, "Whether binding to a plurality of Bluetooth devices is allowed") on the display screen 103 in response to a user operation performed on the Bluetooth device 2 shown on the display screen 103. The electronic device 100 performs a subsequent procedure (for example, determines whether a quantity of Bluetooth devices currently connected to the Bluetooth chip 101 is less than N) only when receiving a confirmation operation based on the prompt information (for example, an operation performed on an "Allow" option in the prompt information); or if the electronic device 100 does not receive the confirmation operation, the display screen 103 cannot be bound to both the Bluetooth device 1 and the Bluetooth device 2. When the "Multi-device connection" function of the Bluetooth device 1 is enabled, the foregoing prompt information is not displayed. For specific descriptions, refer to FIG. 9A and FIG. 9B.

In the foregoing implementation, an example in which a determining result indicates that the quantity of Bluetooth devices currently connected to the Bluetooth chip 101 is less than N (that is, the quantity of Bluetooth devices currently connected to the Bluetooth chip 101 is less than 2) is used for description. In another implementation, when the determining result indicates that the quantity of Bluetooth devices currently connected to the Bluetooth chip 101 is not less than N, the display screen 103 cannot be bound to both the Bluetooth device 1 and the Bluetooth device 2. In some examples, the Bluetooth chip 101 is connected to two Bluetooth devices, the display screen 103 is bound to the Bluetooth device 1, and the display screen 104 is bound to the Bluetooth device 2. The electronic device 100 may receive a user operation (for example, a multi-device pairing operation) performed by the user on a Bluetooth device 3 shown on the display screen 103, and determine whether the quantity of Bluetooth devices currently connected to the Bluetooth chip 101 is less than N (that is, 2). Because a current determining result indicates that the quantity of Bluetooth devices currently connected to the Bluetooth chip 101 is not less than N, the Bluetooth chip 101 is not connected to the Bluetooth device 3. Optionally, the display screen 103 may display prompt information, for example, "The current quantity of connected devices has reached the maximum, and new Bluetooth devices cannot be connected".

Scenario 5: It is assumed that a capability of the Bluetooth chip 101 belongs to the case 2. The Bluetooth chip 101 of the electronic device 100 has been connected to two Bluetooth devices for an audio service (for example, the scenario shown in FIG. 7A and FIG. 7B or the scenario shown in FIG. 9A and FIG. 9B). Herein, the scenario shown in FIG. 9A and FIG. 9B is used as an example for description. The electronic device 100 may receive a user operation performed on a Bluetooth device 3 shown on the display screen 104. It is assumed that the Bluetooth device 3 is "FFF's handle". Although the Bluetooth chip 101 has been connected to the two Bluetooth devices, because the two Bluetooth devices correspond to an audio service, the to-be-connected Bluetooth device 3 corresponds to a game service, and the capability of the Bluetooth chip 101 is sufficient to support a connection to the new Bluetooth device 3, in response to the user operation, the electronic device 100 may connect to the Bluetooth device 3 by using the Bluetooth chip 101, and determine that the Bluetooth device 3 is bound to the display screen 104. In this case, on Bluetooth setting interfaces displayed on the display screen 103 and the display screen 104, lists of paired device further include information about the Bluetooth device 3. In addition, the Bluetooth device 3 displayed on the display screen 103 is not visually distinguished, and the Bluetooth device 3 displayed on the display screen 104 is visually distinguished.

Scenario 6: It is assumed that a capability of the Bluetooth chip 101 belongs to the case 2. The Bluetooth chip 101 of the electronic device 100 has been connected to two Bluetooth devices for an audio service (for example, the scenario shown in FIG. 7A and FIG. 7B or the scenario shown in FIG. 9A and FIG. 9B). Herein, the scenario shown in FIG. 9A and FIG. 9B is used as an example for description. The electronic device 100 may receive a user operation performed on a Bluetooth device 3 shown on the display screen 104. It is assumed that the Bluetooth device 3 is "EEE's Bluetooth headset". Because the Bluetooth chip 101 has been connected to the two Bluetooth devices for an audio service, the to-be-connected Bluetooth device 3 also corresponds to an audio service, and the capability of the Bluetooth chip 101 cannot support a connection to a new Bluetooth device for an audio service, in response to the user operation, the electronic device 100 may determine that the Bluetooth device 3 cannot be connected. In this case, the display screen 104 may display prompt information, where the prompt information indicates that the Bluetooth device 3 cannot be connected. For example, the prompt information is "A quantity of audio devices connected to AAA and BBB reaches 2 (at most), and a new audio device cannot be connected. Disconnect at least one audio device and then connect to the new audio device."

Scenario 7: It is assumed that a capability of the Bluetooth chip 101 belongs to the case 3. When the Bluetooth chip 101 of the electronic device 100 has been connected to two Bluetooth devices (that is, a quantity of the connected Bluetooth chip 101 reaches a maximum of 2) (for example, the scenario shown in FIG. 7A and FIG. 7B or the scenario shown in FIG. 9A and FIG. 9B), the scenario shown in FIG. 9A and FIG. 9B is used as an example for description herein. The electronic device 100 may receive a user operation performed on a Bluetooth device 3 shown on the display screen 104. It is assumed that the Bluetooth device 3 is "FFF's handle". Because the Bluetooth chip 101 has been connected to the two Bluetooth devices, and a maximum of connections that can be supported has been reached, the electronic device 100 determines that a connection cannot be established to the Bluetooth device 3 by using the Bluetooth chip 101. In this case, the display screen 104 may display prompt information, where the prompt information indicates that the Bluetooth device 3 cannot be connected. For example, the prompt information is "A quantity of Bluetooth devices connected to AAA and BBB reaches 2 (at most), and a new device cannot be connected. Disconnect at least one Bluetooth device and then connect to the new device."

Scenario 8: Descriptions of the scenario 8 are similar to those of the scenario 6 or the scenario 7 (the scenario 7 is used as an example herein). The scenario 8 is different from the scenario 6 or the scenario 7 as follows: When a current determining result indicates that the quantity of Bluetooth devices currently connected to the Bluetooth chip 101 is not less than N, the electronic device 100 may cancel a connection to one Bluetooth device, and the electronic device 100 may establish a connection to the Bluetooth device 3 by using the Bluetooth chip 101, and determine that the Bluetooth device 3 is bound to the display screen 104. The Bluetooth device to which the connection is cancelled may be any Bluetooth device connected to the display screen 103 (namely, a display screen that does not receive a user operation). Optionally, when the display screen 103 is bound to a plurality of Bluetooth devices, the Bluetooth device to which the connection is cancelled may be a device that is first connected, or a device that is last connected, or a device that is earliest used last time, or a device that is last used in the plurality of Bluetooth devices. Not limited to these devices, the Bluetooth device to which the connection is cancelled may alternatively be any Bluetooth device bound to the display screen 104. The Bluetooth device to which the connection is cancelled is not limited in embodiments of this application. An example in which the Bluetooth device to which the connection is cancelled is the earliest device that is connected to the display screen 103 (namely, the Bluetooth device 1 or "CCC's Bluetooth headset" shown in FIG. 9A) is used for description. After the electronic device 100 completes the foregoing process, the Bluetooth chip 101 has a connection relationship with the Bluetooth device 2 (namely, "DDD's Bluetooth headset" shown in FIG. 9A) and the Bluetooth device 3 (namely, "EEE's Bluetooth headset" shown in FIG. 9A), the Bluetooth device 2 has a binding relationship with the display screen 103, and the Bluetooth device 3 has a binding relationship with the display screen 104. In this case, on Bluetooth setting interfaces displayed on the display screen 103 and the display screen 104, lists of paired devices further include information about the Bluetooth device 3. In addition, the Bluetooth device 3 displayed on the display screen 103 is not visually distinguished and the displayed Bluetooth device 2 is visually distinguished, and the Bluetooth device 3 displayed on the display screen 104 is visually distinguished and the displayed Bluetooth device 2 is not visually distinguished.

Scenario 9: Descriptions of the scenario 9 are similar to those of the scenario 6 or the scenario 7 (the scenario 7 is used as an example herein). The scenario 9 is different from the scenario 6 or the scenario 7 as follows: When a current determining result indicates that the quantity of Bluetooth devices currently connected to the Bluetooth chip 101 is not less than N, the electronic device 100 may establish a connection to a Bluetooth device 3 by using the Bluetooth chip 101, and determine that the Bluetooth device 3 has a binding relationship with the display screen 104, but the Bluetooth device 3 is in an unavailable state, that is, the display screen 104 cannot communicate with the Bluetooth device 3 by using the Bluetooth chip 101. For example, a list of paired devices displayed on the display screen 104 includes information about the Bluetooth device 3, and the information about the Bluetooth device 3 is similar to the information 721 on the user interface 720 shown in FIG. 7B. Optionally, prompt information in the information about the Bluetooth device 3 further indicates that the Bluetooth device 3 is unavailable, for example, further includes "Unavailable. A quantity of connected Bluetooth devices reaches 2 (at most)". For example, when the display screen 104 receives a user operation used to trigger communication with the Bluetooth device 3 (which may also be referred to trigger use of the Bluetooth device 3), the prompt information is displayed, where the prompt information indicates that the Bluetooth device 3 is unavailable.

In the foregoing implementation, in Bluetooth devices connected to the Bluetooth chip 101 of the electronic device 100, all Bluetooth devices except an unavailable Bluetooth device (for example, the Bluetooth device 3 in the scenario 9) may communicate with the electronic device 100 (including the display screen 103 and the display screen 104) by using the Bluetooth chip 101. For example, when supporting N connections, the Bluetooth chip 101 may support N communication connections. For example, descriptions of the scenario 1 to the scenario 4 are provided.

This is not limited thereto. In another implementation, before transmitting data A to a Bluetooth device by using the Bluetooth chip 101, the electronic device 100 may determine, based on a capability of the Bluetooth chip 101, a type of the data A to be transmitted by the Bluetooth chip 101, a type of data that is currently transmitted by the Bluetooth chip 101, and a quantity of Bluetooth devices to which data is currently transmitted by the Bluetooth chip 101, whether the Bluetooth chip 101 supports transmission of the data A, where the capability of the Bluetooth chip 101 means that the Bluetooth chip 101 supports a maximum of two communication connections. Refer to a similar example case in which the Bluetooth chip 101 of the electronic device 100 supports a maximum of two connections. If a determining result indicates that the quantity of Bluetooth devices currently connected to the Bluetooth chip 101 is less than N, a display screen may transmit the data A to the bound Bluetooth device by using the Bluetooth chip 101. If a determining result indicates that the quantity of Bluetooth devices currently connected to the Bluetooth chip 101 is not less than N, a display screen cannot transmit the data A by using the Bluetooth chip 101, for example, prompt information (for example, "A current quantity of Bluetooth communication connections has reached the maximum (2). Close at least one communication connection and then add a new communication connection") is displayed. For a specific example, refer to the scenario 10.

Scenario 10: It is assumed that a capability of the Bluetooth chip 101 is that communication of two or less channels of audio data and communication of at least one channel of other data can be supported. In some examples, the Bluetooth chip 101 of the electronic device 100 currently does not maintain communication of audio data or has maintained communication of one channel of audio data. When the user triggers addition of a new communication connection of audio data, because the capability of the Bluetooth chip 101 is sufficient to support addition of the new communication connection, the Bluetooth chip 101 may add one communication connection of audio data. In some other examples, the Bluetooth chip 101 of the electronic device 100 currently maintains communication of two channels of audio data. When the user triggers addition of a new communication connection of audio data, because the capability of the Bluetooth chip 101 cannot support more than two communication connections of audio data, it is determined that a communication connection of audio data cannot be added. In some other examples, the Bluetooth chip 101 of the electronic device 100 currently maintains communication of two channels of audio data. When the user triggers addition of a new communication connection of game instruction data, because the capability of the Bluetooth chip 101 is sufficient to support addition of a new communication connection of non-audio data, the Bluetooth chip 101 may add a communication connection of game instruction data.

Scenario 11: When the Bluetooth chip 101 implements communication of different types of data, the electronic device 100 may adjust a status of a communication connection to the Bluetooth chip 101 based on a current status (for example, a data type and a communication status), and optionally adjust a status of a connection to the Bluetooth chip 101. In some examples, the Bluetooth chip 101 has been connected to two Bluetooth headsets and one game controller. It is assumed that the display screen 103 (for example, a front passenger screen) is bound to one of the Bluetooth headsets, the display screen 104 (for example, a rear passenger screen) is bound to the other one of the Bluetooth headsets and the game controller, the display screen 103 outputs audio data by using the bound Bluetooth headset, and the display screen 104 outputs audio data by using the bound Bluetooth headset and transmits game instruction data to the bound game controller. Optionally, the electronic device 100 may reduce a data rate of audio data output by at least one of the foregoing two Bluetooth headsets, to improve real-time performance of the game controller. Optionally, when the electronic device 100 obtains a high delay of the game controller, the electronic device 100 may cancel output of at least one of the foregoing two Bluetooth headsets. Optionally, when the electronic device 100 obtains a high delay of the game controller, the electronic device 100 may cancel a connection to at least one of the foregoing two Bluetooth headsets. Optionally, when the electronic device 100 obtains a high delay of the game controller, the display screen 103 and/or the display screen 104 may display prompt information.

The foregoing implementations show examples of some Bluetooth device connection scenarios, and the following shows examples of some Bluetooth device deletion scenarios. For specific examples, refer to the following scenario 12, scenario 13, and scenario 14. In this embodiment of this application, deleting a Bluetooth device means cancelling pairing with the Bluetooth device.

Scenario 12: When the display screen 103 is bound to a Bluetooth device 1, and the display screen 104 is not bound to the Bluetooth device 1, for example, in the scenario shown in FIG. 5A and FIG. 5B, the electronic device 100 may receive a user operation performed on the display screen 104. The user operation is used to delete the Bluetooth device 1. For example, the user operation is a user operation (for example, a touch operation) performed on an unpairing option on a setting interface of "CCC's Bluetooth headset" displayed on the display screen 104. Descriptions of the setting interface of "CCC's Bluetooth headset" is similar to those of the user interface 1010 shown in FIG. 10, and details are not described again. In response to the user operation, the electronic device 100 may determine whether the Bluetooth device 1 is in use (for example, whether the display screen 103 is outputting audio data by using the Bluetooth device 1). In an implementation, when a determining result indicates that the Bluetooth device 1 is in use, the electronic device 100 may determine that the Bluetooth device 1 cannot be deleted. In this case, the display screen 104 may display prompt information (for example, "The device is being used by another display screen and cannot be deleted"). In another implementation, when a determining result indicates that the Bluetooth device 1 is not in use, the electronic device 100 may display prompt information (for example, "Another display screen requests to delete the CCC's Bluetooth headset. Do you agree?") on the display screen 103, and optionally determine, based on a user operation performed on the display screen 103, whether to delete the Bluetooth device 1. For example, the prompt information further includes an OK control and a cancel control, where the OK control is configured to trigger deletion of the Bluetooth device 1, and the cancel control is configured to cancel deletion of the Bluetooth device 1. This is not limited thereto. In some other examples, the electronic device 100 may alternatively determine whether a user operation performed on the prompt information is received within preset duration after the prompt information is displayed, and determine, based on a determining result, whether to delete the Bluetooth device 1. In some other examples, when the determining result indicates that the user operation performed on the prompt information is not received within preset duration, the electronic device 100 may alternatively directly delete the Bluetooth device 1. A manner of processing by the electronic device 100 when the determining result indicates that the user operation performed on the prompt information is not received within preset duration is not limited in embodiments of this application.

The foregoing implementations pose no limitation. In another implementation, the electronic device 100 may alternatively not determine whether the Bluetooth device 1 is in use, but directly delete the Bluetooth device 1 in response to the user operation performed on the display screen 104.

Scenario 13: When the display screen 103 is bound to a Bluetooth device 1, and the display screen 104 is not bound to the Bluetooth device 1, for example, in the scenario shown in FIG. 5A and FIG. 5B, the electronic device 100 may receive a user operation performed on the display screen 104, where the user operation is used to delete the Bluetooth device 1. In response to the user operation, the electronic device 100 may determine whether the Bluetooth device 1 is bound to another display screen other than the display screen 104. Because a determining result indicates that the Bluetooth device 1 is bound to the another display screen, the electronic device 100 may determine that the Bluetooth device 1 cannot be deleted. In this case, the display screen 104 may display prompt information (for example, "The device is connected to another display screen and cannot be deleted").

Scenario 14: A paired device and/or a connected device of the electronic device 100 include/includes a Bluetooth device 1, but neither the display screen 103 nor the display screen 104 has a binding relationship with the Bluetooth device 1. The electronic device 100 may receive a user operation performed on the display screen 103 or the display screen 104, where the user operation is used to delete the Bluetooth device 1. In response to the user operation, the electronic device 100 may determine whether the Bluetooth device 1 is bound to the display screen. Because a determining result indicates that the Bluetooth device 1 is not bound to the display screen, the electronic device 100 may delete the Bluetooth device 1.

The foregoing implementations pose no limitation. In another implementation, the electronic device 100 may alternatively not determine whether the Bluetooth device 1 is bound to another display screen other than a display screen that receives a user operation, but directly delete the Bluetooth device 1 in response to the user operation.

The following shows some scenarios in which the electronic device 100 is reconnected to the Bluetooth device after being disconnected from the Bluetooth device. For details, refer to the following scenario 15, scenario 16, and scenario 17.

Scenario 15: The electronic device 100 is first in a state 1: The display screen 103 is bound to the Bluetooth device 1 and the display screen 104 is not bound to the Bluetooth device 1 (for example, the scenario shown in FIG. 5A and FIG. 5B), and then is in a state 2: The display screen 104 is bound to the Bluetooth device 1 and the display screen 103 is not bound to the Bluetooth device 1 (for example, the scenario shown in FIG. 6A and FIG. 6B). For an example of a specific process, refer to descriptions in FIG. 5A to FIG. 6B. Then, a Bluetooth connection between the electronic device 100 and the Bluetooth device 1 is terminated (for example, a reason for the termination is that a Bluetooth function of the Bluetooth device 1 or the electronic device 100 is disabled). Subsequently, when a Bluetooth function of the electronic device 100 and the Bluetooth device 1 is enabled, the electronic device 100 may directly establish a Bluetooth connection to the Bluetooth device 1. In addition, the electronic device 100 may determine that the Bluetooth device 1 has a binding relationship with the display screen 104, without requiring the user to perform a connection operation/binding operation (for example, selecting the Bluetooth device 1 on the Bluetooth setting interface displayed on the display screen 104). It may be understood as that the Bluetooth device 1 may be connected to a display screen that is bound last time.

Scenario 16: The display screen 103 is bound to a Bluetooth device, and the display screen 104 is not bound to the Bluetooth device 1, for example, the scenario shown in FIG. 5A and FIG. 5B. Then, a Bluetooth connection between the electronic device 100 and the Bluetooth device 1 is terminated. Subsequently, when a Bluetooth function of the electronic device 100 and the Bluetooth device 1 is enabled, the electronic device 100 may directly establish a Bluetooth connection to the Bluetooth device 1. In addition, the electronic device 100 may determine that the Bluetooth device 1 has a binding relationship with the preset display screen 104, without requiring the user to perform a connection operation/binding operation (for example, selecting the Bluetooth device 1 on the Bluetooth setting interface displayed on the display screen 104). It may be understood as that the Bluetooth device 1 may be bound to the preset display screen of the electronic device 100.

Scenario 17: The electronic device 100 is a vehicle/vehicle-mounted device, the display screen 103 is a front passenger screen, and the display screen 104 is a rear passenger screen. Then, a Bluetooth connection between the electronic device 100 and the Bluetooth device 1 is terminated. Subsequently, when a Bluetooth function of the electronic device 100 and the Bluetooth device 1 is enabled, the electronic device 100 may detect a location of the Bluetooth device 1. When the Bluetooth device 1 is in an area corresponding to the front passenger screen (for example, a cockpit of a front passenger seat), the electronic device 100 may connect to the Bluetooth device 1 and determine that the Bluetooth device 1 is bound to the display screen 103. When the Bluetooth device 1 is in an area corresponding to the rear passenger screen (for example, a cockpit of a rear seat), the electronic device 100 may connect to the Bluetooth device 1 and determine that the Bluetooth device 1 is bound to the display screen 104. It may be understood as that the Bluetooth device 1 may be bound to a display screen in an area in which the Bluetooth device 1 is located.

In an implementation, any display screen (the display screen 103 is used as an example for description) of the electronic device 100 may communicate with a plurality of Bluetooth devices. However, only one of the plurality of Bluetooth devices may be connected to the electronic device 100 and bound to the display screen 103, and another Bluetooth device may be in a listening state (for example, a Bluetooth device bound to the display screen 103 is listened on). In this case, the display screen 103 is still in scenario of "one screen with one communication connection".

A short-range communication method in embodiments of this application is described based on the foregoing embodiments. The method may be applied to the electronic device 100 shown in FIG. 1. The method may be applied to the electronic device 100 shown in FIG. 2. The method may be applied to the electronic device 100 shown in FIG. 3. The following procedure is described by using an example in which the electronic device 100 has the structure shown in FIG. 1.

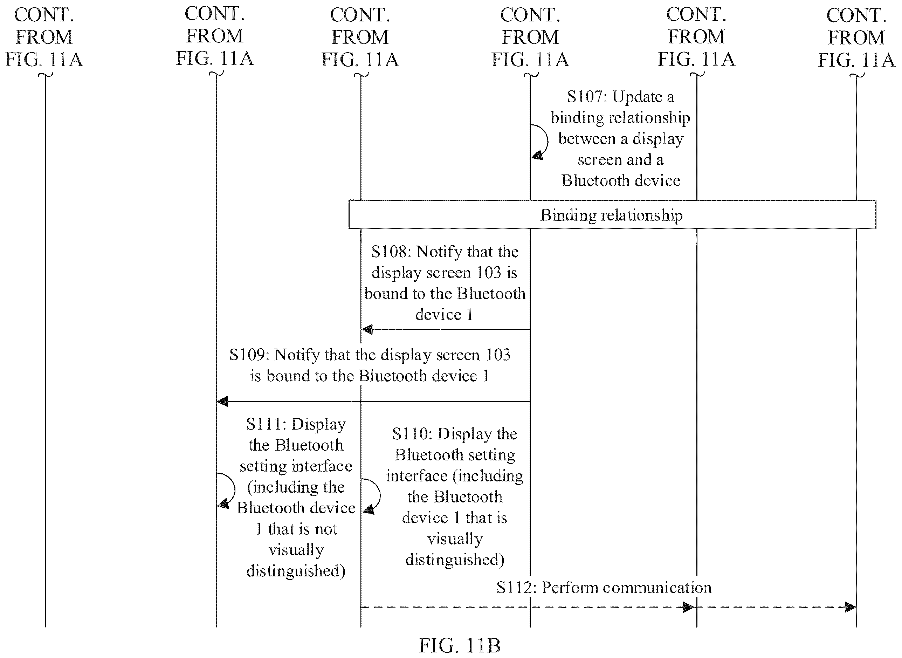

FIG. 11A and FIG. 11B are a schematic flowchart of a Bluetooth connection process according to an embodiment of this application. FIG. 11A and FIG. 11B are described by using an example in which the process includes establishing a Bluetooth connection between the electronic device 100 and the Bluetooth device 1. The process may include but is not limited to the following steps.

S101: The Bluetooth device 1 performs advertising (for example, advertises information about the Bluetooth device 1) through Bluetooth.

S102: The display screen 103 scans for devices through Bluetooth, and displays a Bluetooth setting interface (available devices include the Bluetooth device 1).

S103: The display screen 104 scans for devices through Bluetooth, and displays a Bluetooth setting interface (available devices include the Bluetooth device 1).

S103 is an optional step.

In an implementation, the display screen 103 and/or the display screen 104 may scan for surrounding Bluetooth devices by using the Bluetooth chip 101, and display, on the Bluetooth setting interfaces, Bluetooth devices found through scanning (namely, the available devices). Optionally, after a Bluetooth function of the display screen 103 and/or a Bluetooth function of the display screen 104 is enabled, the display screen 103 and/or the display screen 104 may scan for the surrounding Bluetooth devices by using the Bluetooth chip 101. For a specific example, refer to FIG. 4A and FIG. 4B. The lists of available devices in FIG. 4A and FIG. 4B are used to display the Bluetooth devices found through scanning. In some examples, because the Bluetooth device 1 is currently performing advertising through Bluetooth, the display screen 103 and the display screen 104 may find, through scanning, the Bluetooth device 1 by using the Bluetooth chip 101. On the Bluetooth setting interfaces displayed on the display screen 103 and the display screen 104, the available devices may include the Bluetooth device 1.

S104: When the electronic device 100 receives a user operation performed on the Bluetooth device 1 on the Bluetooth setting interface displayed on the display screen 103, the electronic device 100 performs connection and paring with the Bluetooth device 1 by using the Bluetooth chip 101.

In an implementation, FIG. 11A and FIG. 11B are illustrated by using an example in which the Bluetooth chip 101 is not connected to any Bluetooth device before S104. Therefore, the Bluetooth chip 101 is sufficient to support a connection to the new Bluetooth device 1. In response to the user operation, the electronic device 100 may establish a Bluetooth connection (including a pairing process and a connection process) to the Bluetooth device 1 by using the Bluetooth chip 101.

After S104, the Bluetooth chip 101 has established the Bluetooth connection to the Bluetooth device 1. In other words, the Bluetooth chip 101 has a connection relationship with the Bluetooth device 1.

S105: The Bluetooth chip 101 notifies the display screen 103 that the Bluetooth device 1 is connected.

In an implementation, the Bluetooth chip 101 may notify the SoC 102 that the Bluetooth chip 1 is connected, and then the SoC 102 notifies the display screen 103 that the Bluetooth device 1 is connected.

S106: The display screen 103 requests the SoC 102 for binding to the Bluetooth device 1.

In an implementation, the SoC 102 may be configured to maintain a binding relationship between a display screen of the electronic device 100 and a Bluetooth device (which is specifically a Bluetooth device that has a connection relationship with the Bluetooth chip 101). In an implementation, before S106, the Bluetooth device 1 has the connection relationship with the Bluetooth chip 101, but has no binding relationship with the display screen 103/the display screen 104. Therefore, in this case, the SoC 102 does not maintain a binding relationship between the display screen of the electronic device 100 and the Bluetooth device 1. Optionally, for an example of an interface displayed on the display screen in this case, refer to FIG. 4A and FIG. 4B.

In an implementation, the display screen 103 may send a request message to the SoC 102, where the request message is used to request the binding relationship between the display screen 103 and the Bluetooth device 1. Optionally, the request message includes information about the Bluetooth device 1.

S107: The SoC 102 updates the binding relationship between the display screen and the Bluetooth device.

In an implementation, after receiving the request from the display screen 103, the SoC 102 may update the maintained binding relationship between the display screen and the Bluetooth device, that is, add the binding relationship between the display screen 103 and the Bluetooth device 1. In an implementation, after updating the binding relationship between the display screen and the Bluetooth device, the SoC 102 may notify the display screen 103 and the display screen 104 of an update result, for example, S108 and S 109 are performed, so that the display screen 103 and the display screen 104 adjust a display interface based on the update result, for example, S110 and S111 are performed.

After S107, the Bluetooth device 1 has the connection relationship with the Bluetooth chip 101, and the Bluetooth device 1 has the binding relationship with the display screen 103.

Descriptions of S105 to S107 pose no limitation. In another implementation, after the SoC 102 learns that the Bluetooth chip 1 is connected, S107 may be directly performed, and S105 and S106 are not performed.

S108: The SoC 102 notifies the display screen 103 that the display screen 103 is bound to the Bluetooth device 1.

S109: The SoC 102 notifies the display screen 104 that the display screen 103 is bound to the Bluetooth device 1.

S110: The display screen 103 displays the Bluetooth setting interface (including the Bluetooth device 1 that is visually distinguished).

S110 is an optional step.

In an implementation, after S108, the display screen 103 may display the Bluetooth setting interface. The Bluetooth device 1 on the Bluetooth setting interface is visually distinguished and is in a paired state. The paired state herein means that a display manner indicates that the Bluetooth device 1 has been paired with the Bluetooth chip 101 through Bluetooth. For example, when the Bluetooth device 1 is displayed in a list of paired devices, it may be considered that the Bluetooth device 1 is in the paired state. "Visually distinguished" in this embodiment of this application may include, but is not limited to, at least one of the following: highlighting, displaying in bold, displaying in italics, underlining, a background shade, a border such as a circle or a rectangle around characters, a font color different from that of another text, a font type different from that of another text (for example, the regular script and the Song typeface belong to different font families), and a font size different from that of another text, and the like.

S111: The display screen 104 displays the Bluetooth setting interface (including the Bluetooth device 1 that is not visually distinguished).

S111 is an optional step.

In an implementation, after S109, the display screen 104 may display the Bluetooth setting interface, and the Bluetooth device 1 on the Bluetooth setting interface is not visually distinguished. The Bluetooth device 1 on the Bluetooth setting interface may be in the paired state in some examples or may not be in the paired state in some other examples.

In some examples, a scenario of the procedure shown in FIG. 11A and FIG. 11B is the scenario 1. The Bluetooth device 1 is "CCC's Bluetooth headset". For examples of interfaces in S102 and S103, refer to FIG. 4A and FIG. 4B. For example, the user operation described in S104 is an operation performed on "CCC's Bluetooth headset" in the list 416 of available devices on the user interface 410 shown in FIG. 4A. For examples of interfaces in S110 and S111, refer to FIG. 5A and FIG. 5B.

A sequence of S108 and S109 is not limited, and a sequence of S110 and S111 is not limited.

S112: The display screen 103 communicates with the Bluetooth device 1 by using the Bluetooth chip 101.

S112 is an optional step.

In an implementation, after S107, that is, when the SoC 102 maintains the binding relationship between the display screen 103 and the Bluetooth device 1, the display screen 103 may communicate with the Bluetooth device 1 by using the Bluetooth chip 101, to implement a service of the display screen 103. In some examples, the Bluetooth device 1 is a headset, and the display screen 103 may send audio data to the Bluetooth device 1, to implement an audio play service of outputting the audio data of the display screen 103 by using the Bluetooth device 1. In some other examples, the Bluetooth device 1 is a game controller, and the display screen 103 may receive game instruction data sent by the Bluetooth device 1, to implement a game service of operating a game status of the display screen 103 by using the Bluetooth device 1. In some other examples, the Bluetooth device 1 is a microphone, and the display screen 103 may receive voice data sent by the Bluetooth device 1, to operate a voice assistant service of the display screen 103 by using the Bluetooth device 1. A communication manner and an implemented service are not limited in embodiments of this application.

In the method shown in FIG. 11A and FIG. 11B, the display screen 103 and the display screen 104 may share one Bluetooth chip 101. Both the display screen 103 and the display screen 104 may display the Bluetooth devices (for example, the Bluetooth device 1) found by the Bluetooth chip 101 through scanning. Both a user A who uses the display screen 103 and a user B who uses the display screen 104 may select the Bluetooth device 1 for connection, to ensure that Bluetooth functions provided for the user A and the user B are consistent. After the display screen 103 is bound to the Bluetooth device 1, the Bluetooth device 1 in the paired state may be displayed on the display screen 103 and the display screen 104, rather than only on the display screen 103 (in this case, the user B cannot obtain a Bluetooth device bound to a display screen other than the display screen 103). In addition, the Bluetooth device 1 is visually distinguished on the display screen 103, and the Bluetooth device 1 is not visually distinguished on the display screen 104. In this way, the user A who uses the display screen 103 can learn that the electronic device 100 is paired with the Bluetooth device 1 and the display screen 103 is bound to the Bluetooth device 1, and the user B who uses the display screen 104 can learn that the electronic device 100 is paired with the Bluetooth device 1 and the display screen 104 is not bound to the Bluetooth device 1. This effectively improves user experience.

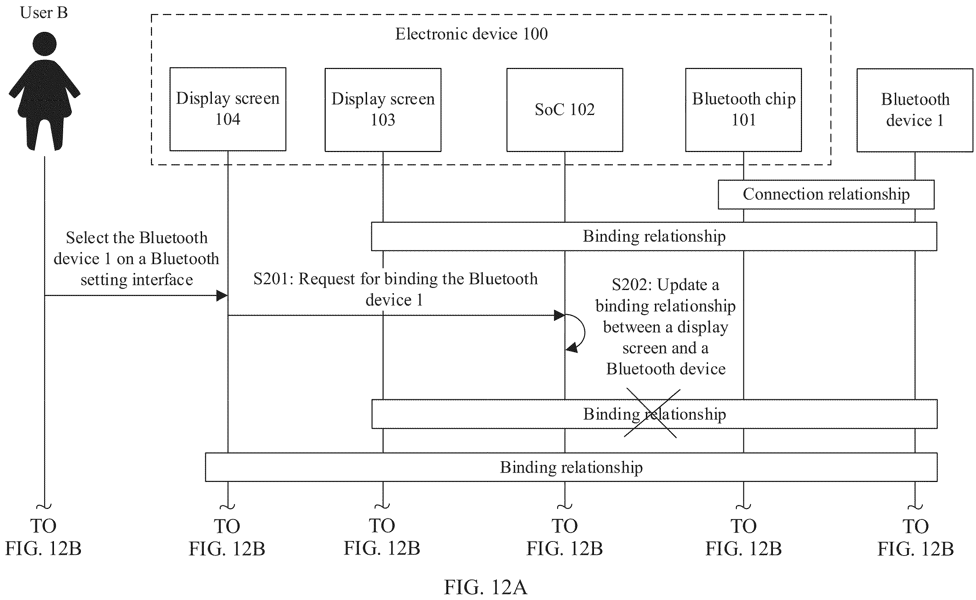

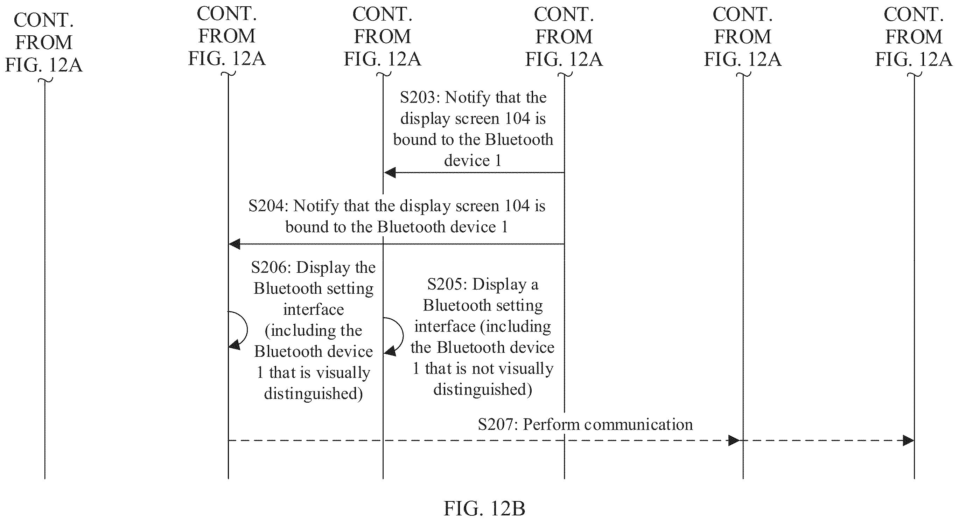

FIG. 12A and FIG. 12B are a schematic flowchart of a binding relationship update process according to an embodiment of this application. FIG. 12A and FIG. 12B are described by using an example in which the process includes updating a binding relationship related to the Bluetooth device 1.

FIG. 12A and FIG. 12B are described by using an example in which the Bluetooth chip 101 has a connection relationship with the Bluetooth device 1, and the display screen 103 has a binding relationship with the Bluetooth device 1. For example, the procedure shown in FIG. 11A and FIG. 11B is performed before FIG. 12A and FIG. 12B.

The process may include but is not limited to the following steps.

S201: When the electronic device 100 receives a user operation performed on the Bluetooth device 1 on a Bluetooth setting interface displayed by the display screen 104, the display screen 104 requests the SoC 102 for binding the Bluetooth device 1.

S202: The SoC 102 updates a binding relationship between the display screen and the Bluetooth device.

In an implementation, after receiving the request from the display screen 104, the SoC 102 may update the maintained binding relationship between the display screen and the Bluetooth device, that is, update a display screen bound to the Bluetooth device 1 from the display screen 103 to the display screen 104. In an implementation, after updating the binding relationship between the display screen and the Bluetooth device, the SoC 102 may notify the display screen 103 and the display screen 104 of an update result, for example, S203 and S204 are performed, so that the display screen 103 and the display screen 104 adjust a display interface based on the update result, for example, S205 and S206 are performed.

After S202, the Bluetooth device 1 is no longer bound to the display screen 103, but is bound to the display screen 104. In other words, the binding relationship between the Bluetooth device 1 and the display screen 103 is deleted/cancelled, and a binding relationship between the Bluetooth device 1 and the display screen 104 is added. In addition, the connection relationship between the Bluetooth device 1 and the Bluetooth chip 101 remains unchanged.

S203: The SoC 102 notifies the display screen 103 that the display screen 104 is bound to the Bluetooth device 1.

S204: The SoC 102 notifies the display screen 104 that the display screen 104 is bound to the Bluetooth device 1.

S205: The display screen 103 displays a Bluetooth setting interface (including the Bluetooth device 1 that is not visually distinguished).

S205 is an optional step. S205 is similar to S111 in FIG. 11B. For details, refer to descriptions of S111 in FIG. 11B. Details are not described again.

S206: The display screen 104 displays a Bluetooth setting interface (including the Bluetooth device 1 that is visually distinguished).

S206 is an optional step. S206 is similar to S110 in FIG. 11B. For details, refer to descriptions of S110 in FIG. 11B. Details are not described again.

In some examples, a scenario of the procedure shown in FIG. 11A and FIG. 11B is the scenario 2. The Bluetooth device 1 is "CCC's Bluetooth headset". For an example of an interface before S201, refer to FIG. 5A and FIG. 5B. For example, the user operation described in S201 is an operation performed on the information 521 about "CCC's Bluetooth headset" on the user interface 520 shown in FIG. 5B. For examples of interfaces in S205 and S206, refer to FIG. 6A and FIG. 6B.

A sequence of S203 and S204 is not limited, and a sequence of S205 and S206 is not limited.

S207: The display screen 104 communicates with the Bluetooth device 1 by using the Bluetooth chip 101.

S207 is an optional step. S207 is similar to S112 in FIG. 11B. For details, refer to descriptions of S112 in FIG. 11B. Details are not described again.

In the method shown in FIG. 12A and FIG. 12B, after the Bluetooth chip 101 establishes a Bluetooth connection to the Bluetooth device 1, when the display screen 103 is bound to the Bluetooth device 1, in response to a user operation (used to trigger a connection to the Bluetooth device 1) of the user B who uses the display screen 104, the electronic device 100 may switch a display screen bound to the Bluetooth device 1 to the display screen 104. It may be understood as that when the display screen 103 and the display screen 104 share one Bluetooth chip 101, for the Bluetooth device 1 connected to the Bluetooth chip 101, either the display screen 103 or the display screen 104 may be connected to and use the Bluetooth device 1. It may also be understood as that the connection relationship between the Bluetooth chip 101 and the Bluetooth device 1 is fixed, and a binding relationship between a display screen of the electronic device 100 and the Bluetooth device 1 is variable. Therefore, in response to the user operation of the user B, the electronic device 100 may directly update the binding relationship between the display screen and the Bluetooth device 1, and does not need to be re-connected to and paired with the Bluetooth device 1. This reduces device power consumption and improves user efficiency.

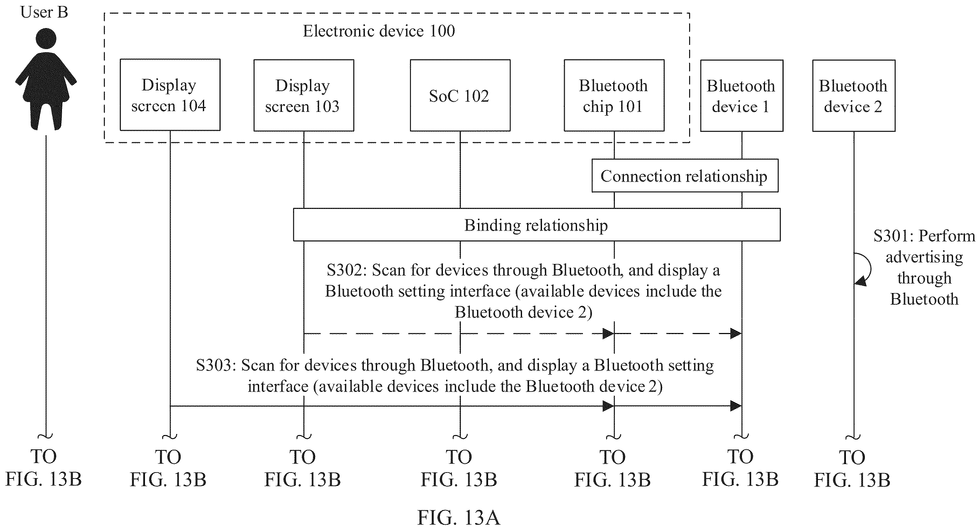

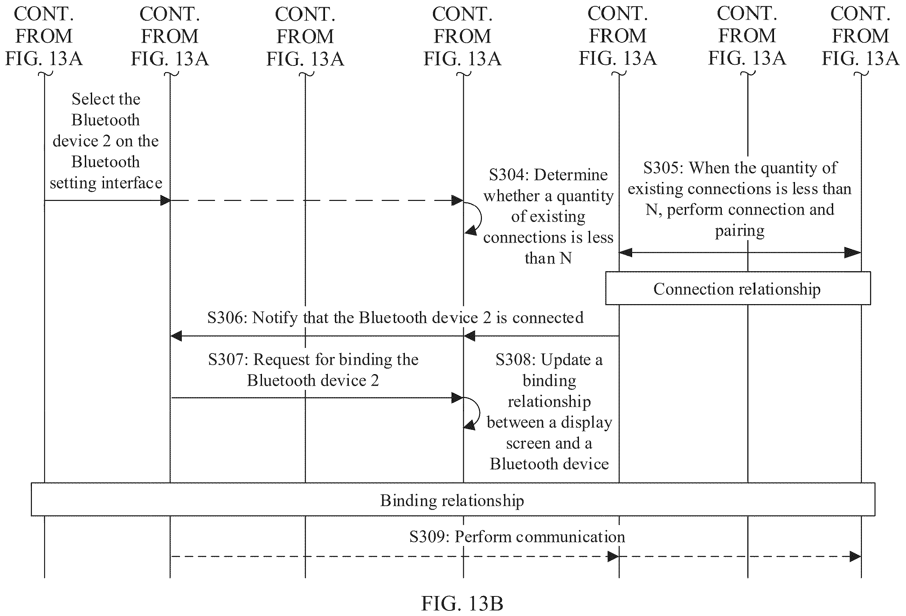

FIG. 13A and FIG. 13B are a schematic flowchart of another Bluetooth connection process according to an embodiment of this application. FIG. 13A and FIG. 13B are described by using an example in which the process includes establishing a Bluetooth connection between the electronic device 100 and the Bluetooth device 2.

FIG. 13A and FIG. 13B are described by using an example in which the Bluetooth chip 101 has a connection relationship with the Bluetooth device 1, and the display screen 103 has a binding relationship with the Bluetooth device 1. For example, the procedure shown in FIG. 11A and FIG. 11B is performed before FIG. 13A and FIG. 13B.

The process may include but is not limited to the following steps.

S301: The Bluetooth device 2 performs advertising (for example, advertising information about the Bluetooth device 2) through Bluetooth.

S302: The display screen 103 scans for devices through Bluetooth, and displays a Bluetooth setting interface (available devices include the Bluetooth device 2).

S303: The display screen 104 scans for devices through Bluetooth, and displays a Bluetooth setting interface (available devices include the Bluetooth device 2).

S302 is an optional step.

S302 and S303 are similar to S102 and S103 in FIG. 11A. For details, refer to descriptions of S102 and S103 in FIG. 11A.

S304: When the electronic device 100 receives a user operation performed on the Bluetooth device 2 on the Bluetooth setting interface displayed on the display screen 104, the SoC 102 determines whether a quantity of existing connections is less than N.

In an implementation, when the electronic device 100 receives the user operation, the SoC 102 may determine whether a quantity of existing connections (namely, a quantity of connected Bluetooth devices) to the Bluetooth chip 101 is less than a maximum quantity of connections (that is, N) supported by the Bluetooth chip 101. When a determining result indicates that the quantity of existing connections to the Bluetooth chip 101 is less than the maximum quantity of connections, the SoC 102 may determine that the Bluetooth chip 101 may establish a Bluetooth connection to the Bluetooth device 2, for example, S305 is to be performed. FIG. 13A and FIG. 13B are described by using an example in which the foregoing determining result indicates that the quantity of existing connections to the Bluetooth chip 101 is less than the maximum quantity of connections. FIG. 13A and FIG. 13B are described by using an example in which a capability of the Bluetooth chip 101 is the case 3 (that is, for a Bluetooth device of any service, the Bluetooth chip 101 supports a maximum of N connections).

S305: When the quantity of existing connections is less than N, the electronic device 100 is connected to and paired with the Bluetooth device 2 by using the Bluetooth chip 101.

After S305, the Bluetooth chip 101 has a connection relationship with the Bluetooth device 2.

S306: The Bluetooth chip 101 notifies the display screen 104 that the Bluetooth device 2 is connected.

Descriptions of S306 are similar to those of S105 in FIG. 11A. For details, refer to descriptions of S105 in FIG. 11A.

S307: The display screen 104 requests the SoC 102 for binding the Bluetooth device 2.

Descriptions of S307 are similar to those of S106 in FIG. 11A. For details, refer to descriptions of S106 in FIG. 11A.

S308: The SoC 102 updates a binding relationship between the display screen and the Bluetooth device.

In an implementation, after receiving the request from the display screen 104, the SoC 102 may add a binding relationship between the display screen 104 and the Bluetooth device 2 to the maintained binding relationship. In an implementation, after updating the binding relationship between the display screen and the Bluetooth device, the SoC 102 may notify the display screen 103 and the display screen 104 of an update result. An implementation process is similar to S108 and S109 in FIG. 11B, and a difference lies in that notification content in this time is that the display screen 104 is bound to the Bluetooth device 2. The display screen 103 and the display screen 104 may adjust a display interface based on the received update result. An implementation process is similar to S110 and S111 in FIG. 11B.

In some examples, a scenario of the procedure shown in FIG. 13A and FIG. 13B is the scenario 3, the Bluetooth device 1 is "CCC's Bluetooth headset", and the Bluetooth device 2 is "DDD's Bluetooth headset". For examples of interfaces in S302 and S303, refer to FIG. 5A and FIG. 5B. For example, the user operation in S304 is an operation performed on "DDD's Bluetooth headset" in the list 426 of available devices on the user interface 520 shown in FIG. 5B. For examples of interfaces of the display screen 103 and the display screen 104 after S308, refer to FIG. 7A and FIG. 7B.

Descriptions of S306 to S308 pose no limitation. In another implementation, after the electronic device 100 is connected to and paired with the Bluetooth device 2 by using the Bluetooth chip 101, S308 may be directly performed, but S306 and S307 are not performed.

S309: The display screen 104 communicates with the Bluetooth device 2 by using the Bluetooth chip 101.

S309 is an optional step. S309 is similar to S112 in FIG. 11B. For details, refer to descriptions of S112 in FIG. 11B. Details are not described again.

The determining shown in S304 in FIG. 13B poses no limitation. In another implementation, the electronic device 100 further determines, based on the capability of the Bluetooth chip 101 (specifically, a capability of connecting to a Bluetooth device), a service type of a to-be-connected Bluetooth device, a quantity of Bluetooth devices currently connected to the Bluetooth chip 101 (namely, a quantity of existing connections), and a service type of a Bluetooth device currently connected to the Bluetooth chip 101, whether to connect to the to-be-connected Bluetooth device. For an example of the capability of the Bluetooth chip 101, refer to the case 1, the case 2, and the case 3. For an example scenario, refer to the scenario 1 to the scenario 9.

The procedure shown in FIG. 13A and FIG. 13B poses no limitation. In another implementation, when a determining result in S304 indicates that the quantity of existing connections to the Bluetooth chip 101 is not less than the maximum quantity of connections, the SoC 102 may determine that the Bluetooth chip 101 cannot establish a Bluetooth connection to the Bluetooth device 2, and therefore S304 is not performed. Optionally, the display screen 104 may display corresponding prompt information. For an example scenario, refer to the foregoing scenario 7. In another implementation, when a determining result in S304 indicates that the quantity of existing connections to the Bluetooth chip 101 is not less than the maximum quantity of connections, the SoC 102 may indicate the Bluetooth chip 101 to disconnect from one Bluetooth device, and indicate the Bluetooth chip 101 to establish a connection to the Bluetooth device 2. For example, based on the procedure shown in FIG. 13A and FIG. 13B, the Bluetooth chip 101 is disconnected from the Bluetooth device 1, and correspondingly the Bluetooth device 1 is also unbound from the display screen 103. For an example scenario, refer to the foregoing scenario 8. In another implementation, when a determining result in S304 indicates that the quantity of existing connections to the Bluetooth chip 101 is not less than the maximum quantity of connections, the SoC 102 may determine that a Bluetooth connection can be established between the Bluetooth chip 101 and the Bluetooth device 2, but the Bluetooth device 2 cannot be used. For an example scenario, refer to the foregoing scenario 9.

The procedure shown in FIG. 13A and FIG. 13B poses no limitation. In another implementation, before the electronic device 100 receives a user operation used to trigger a connection to a new Bluetooth device, there may be more Bluetooth devices that have a connection relationship with the Bluetooth chip 101. For specific example scenarios, refer to FIG. 7A to FIG. 9B. This is not limited in embodiments of this application.

In the method shown in FIG. 13A and FIG. 13B, the display screen 103 and the display screen 104 share one Bluetooth chip 101. When receiving a user operation used to trigger binding of the display screen 104 to the Bluetooth device 2, the electronic device 100 needs to first determine whether a quantity of existing connections (including a current connection to the display screen 103 and a current connection to the display screen 104) to the Bluetooth chip 101 is less than N, that is, determine whether the Bluetooth chip 101 can support addition of a new connection; and the Bluetooth chip 101 adds the new connection (for example, the Bluetooth device 1) only when a determining result indicates that the Bluetooth chip 101 can support addition of the new connection, to ensure that the Bluetooth chip 101 can normally support connections to the display screen 103 and the display screen 104, that is, both the display screen 103 and the display screen 104 can be normally connected to and communicate with bound Bluetooth devices, and avoid a case in which when the new connection is added, a Bluetooth function cannot be normally used due to an abnormal connection to another display screen. This effectively improves user experience.

The procedures shown in FIG. 11A to FIG. 13B are described by using an example in which after the display screen has a binding relationship with the Bluetooth device, the display screen may communicate with the Bluetooth device by using the Bluetooth chip 101. In some other embodiments, before the display screen communicates with the bound Bluetooth device, the electronic device 100 may first determine whether a current communication connection to the Bluetooth chip 101 is less than P, and determine, based on a determining result, whether the display screen can communicate with the bound Bluetooth device by using the Bluetooth chip 101. For a specific example, refer to FIG. 14A and FIG. 14B.

FIG. 14A and FIG. 14B are a schematic flowchart of a Bluetooth communication process according to an embodiment of this application.

FIG. 14A and FIG. 14B are described by using the following cases as an example: The Bluetooth chip 101 has a connection relationship with the Bluetooth device 1, the Bluetooth device 2, and the Bluetooth device 3, the display screen 103 has a binding relationship with the Bluetooth device 1 and the Bluetooth device 2, and the display screen 104 has a binding relationship with the Bluetooth device 3. For an example of a process in which the electronic device 100 establishes a connection relationship and a binding relationship with any Bluetooth device, refer to FIG. 11A and FIG. 11B.

The process may include but is not limited to the following steps.

S401: When the electronic device 100 receives a user operation (used to trigger communication with the Bluetooth device 3) performed on the display screen 104, the SoC 102 determines whether a quantity of existing communication connections is less than P.

In an implementation, in response to the user operation performed on the display screen 104, the SoC 102 may determine whether a quantity of existing communication connections (namely, a quantity of Bluetooth devices that have been connected and are transmitting data) for the Bluetooth chip 101 is less than a maximum quantity of communication connections (that is, P) supported by the Bluetooth chip 101. In a case (namely, a case A shown in FIG. 14B), when a determining result indicates that the quantity of existing communication connections to the Bluetooth chip 101 is less than the maximum quantity of communication connections, the SoC 102 determines that a new communication connection may be added, for example, S402 is to be performed. In another case (namely, a case B shown in FIG. 14B), when a determining result indicates that the quantity of existing communication connections to the Bluetooth chip 101 is not less than the maximum quantity of communication connections, the SoC 102 determines that a new communication connection cannot be added, for example, S403 and S404 are performed.

S402: When the quantity of existing communication connections is less than P, the display screen 104 communicates with the Bluetooth device 3 by using the Bluetooth chip 101.

In an implementation, when the quantity of existing communication connections is less than P, the display screen 103 may communicate with the Bluetooth device 3 by using the Bluetooth chip 101, to implement a service of the display screen 103.

In some examples, it is assumed that P is 2. Before S401, the quantity of existing communication connections may be 0, that is, the display screen 103 does not communicate with the bound Bluetooth device 1 or Bluetooth device 2 by using the Bluetooth chip 101. This is not limited thereto. In some other examples, before S401, the quantity of existing communication connections may be 1, that is, the display screen 103 is communicating with the bound Bluetooth device 1 or Bluetooth device 2 by using the Bluetooth chip 101. For a specific example, refer to the scenario shown in FIG. 7A and FIG. 7B.

S403: When the quantity of existing communication connections is greater than or equal to P, the SoC 102 sends a corresponding notification to the display screen 104.

In an implementation, based on the notification sent by the SoC 102, the display screen 104 may learn that the display screen 104 cannot communicate with the Bluetooth device 3 by using the Bluetooth chip 101. Optionally, in this case, prompt information may be displayed, for example, S404 is to be performed.

S404: The display screen 104 displays the prompt information (the prompt information indicates, for example, that a maximum quantity of communication connections has reached currently, and communication with the Bluetooth device 3 is unachievable).

S404 is an optional step.

The determining shown in S401 in FIG. 14B poses no limitation. In another implementation, the electronic device 100 further determines, based on a capability of the Bluetooth chip 101 (specifically, a capability of supporting simultaneous data transmission), a type of to-be-transmitted data (namely, a type of service data of the display screen 104, or may be understood as a service type of a Bluetooth device 3 for communication), a quantity of Bluetooth devices that currently transmit data by using the Bluetooth chip 101 (namely, a quantity of existing communication connections to the Bluetooth chip 101), and a type of data currently transmitted by using the Bluetooth chip 101 (which may also be understood as a service type of a Bluetooth device that currently communicates data by using the Bluetooth chip 101), whether to add a new communication connection. An example of the capability of the Bluetooth chip 101 is similar to the case 1, case 2, and case 3. For an example scenario, refer to the foregoing scenario 10, which is not limited thereto. For example, a scenario similar to the scenario 1 to the scenario 9 further exists.

In the method shown in FIG. 14A and FIG. 14B, the display screen 103 and the display screen 104 share one Bluetooth chip 101. When receiving a user operation used to trigger addition of a new communication connection, the electronic device 100 needs to first determine whether the quantity of existing communication connections (including a current communication connection to the display screen 103 and a current communication connection to the display screen 104) to the Bluetooth chip 101 is less than P, that is, determine whether the Bluetooth chip 101 can support addition of the new communication connection; and when a determining result indicates that the Bluetooth chip 101 can support addition of the new communication connection, the Bluetooth chip 101 adds the new communication connection (for example, the Bluetooth device 3), to ensure that the Bluetooth chip 101 can normally support communication connections to the display screen 103 and the display screen 104, so that both the display screen 103 and the display screen 104 can normally perform data transmission with the bound Bluetooth devices, and avoid a case in which when the new communication connection is added, a Bluetooth function cannot be normally used due to an abnormal communication connection to another display screen. This effectively improves user experience.

FIG. 15A and FIG. 15B are a schematic flowchart of a process of deleting a Bluetooth device according to an embodiment of this application.

FIG. 15A and FIG. 15B are described by using an example in which the Bluetooth chip 101 has a connection relationship with the Bluetooth device 1, and the display screen 103 has a binding relationship with the Bluetooth device 1. For example, the procedure shown in FIG. 11A and FIG. 11B is performed before FIG. 15A and FIG. 15B.

The process may include but is not limited to the following steps.

S501: When the electronic device 100 receives a user operation (used to trigger deletion of a Bluetooth device) performed on the display screen 104, the SoC 102 determines whether the Bluetooth device 1 is currently in use.

In an implementation, in response to the user operation performed on the display screen 104, the SoC 102 may determine whether the Bluetooth device 1 is currently used by the bound display screen 103 (for example, whether the display screen 103 transmits service data with the Bluetooth device 1). In some examples, it is assumed that the Bluetooth device 1 is "CCC's Bluetooth headset". The user operation performed on the display screen 104 may include an operation performed on an unpair control on a setting interface of the Bluetooth device 1 displayed on the display screen 104. The setting interface of the Bluetooth device 1 is similar to the user interface 1010 shown in FIG. 10 (an option 1013 is an unpair control). In a case (namely, a case C shown in FIG. 15A), when a determining result indicates that the Bluetooth device 1 is currently in use, the SoC 102 determines that the Bluetooth device 1 cannot be deleted, for example, S502 and S503 are performed. In another case (namely, a case D shown in FIG. 15B), when a determining result indicates that the Bluetooth device 1 is not currently in use, the SoC 102 determines that the Bluetooth device 1 is deleted, for example, S504 to S510 are performed.

S502: When the display screen 103 is using the Bluetooth device 1, the SoC 102 sends, to the display screen 104, a notification that the Bluetooth device 1 cannot be deleted.

In an implementation, based on the notification sent by the SoC 102, the display screen 104 may learn that the Bluetooth device 1 cannot be deleted currently. Optionally, in this case, prompt information may be displayed, for example, S503 is to be performed.

S503: The display screen 104 displays prompt information (for example, the prompt information indicates that the Bluetooth device 1 is in use and cannot be deleted).

S503 is an optional step.

S504: Cancel pairing between the Bluetooth chip 101 and the Bluetooth device 1 when the Bluetooth device 1 is not in use.

S505: When pairing between the Bluetooth chip 101 and the Bluetooth device is successfully cancelled, the Bluetooth chip 101 notifies the SoC 102 that pairing with the Bluetooth device 1 has been cancelled, so that the SoC 102 notifies the display screen 103 and the display screen 104 that pairing with the Bluetooth device 1 has been cancelled (for example, S507 and S508).

S506: The SoC 102 updates a binding relationship between the display screen and the Bluetooth device.

In an implementation, after receiving the notification sent by the Bluetooth chip 101, the SoC 102 may delete a binding relationship related to the Bluetooth device 1, that is, delete a binding relationship between the display screen 103 and the Bluetooth device 1.

S507: The SoC 102 notifies the display screen 103 that pairing with the Bluetooth device 1 has been cancelled.

S508: The SoC 102 notifies the display screen 104 that pairing with the Bluetooth device 1 has been cancelled.

A sequence of S506, S507, and S508 is not limited.

S509: The display screen 103 displays a Bluetooth setting interface (excluding the Bluetooth device 1 in a paired state).

S509 is an optional step.

In an implementation, after receiving the notification sent by the SoC 102, the display screen 103 may learn that pairing with the Bluetooth device 1 is currently cancelled. Therefore, when the Bluetooth setting interface is displayed, the Bluetooth device 1 may not be displayed, or although the Bluetooth device 1 is displayed, the Bluetooth device 1 is not in the paired state.

S510: The display screen 104 displays a Bluetooth setting interface (excluding the Bluetooth device 1 in the paired state).

S510 is an optional step.

Descriptions of S510 are similar to those of S509, and details are not described again.

In some examples, a scenario of the procedure shown in FIG. 15A and FIG. 15B is the scenario 12.

In the method shown in FIG. 15A and FIG. 15B, the display screen 103 and the display screen 104 share one Bluetooth chip 101. The user may trigger, on the display screen 104, deletion of the Bluetooth device 1 bound to the display screen 103. In other words, each screen of the electronic device 100 provides a function of deleting a paired Bluetooth device (including a Bluetooth device bound to another screen), making a user operation more flexible. In addition, in response to a user operation, the electronic device 100 needs to first determine whether the Bluetooth device 1 is currently in use. When a determining result indicates that the Bluetooth device 1 is currently in use, the electronic device 100 does not delete the Bluetooth device 1; or when a determining result indicates that the Bluetooth device 1 is not currently in use, the electronic device 100 deletes the Bluetooth device 1, to prevent the Bluetooth device 1 from being accidentally deleted while in use, so that the user A who uses the display screen 103 has good experience, making a function of deleting the Bluetooth device more intelligent. This improves user experience.

The procedure shown in FIG. 15A and FIG. 15B poses no limitation. In some other embodiments, determining in S501 may be replaced with determining whether the Bluetooth device 1 is currently bound to another screen other than the display screen 104; and when a determining result indicates that the Bluetooth device 1 is currently bound to the another screen, the SoC 102 determines that the Bluetooth device 1 cannot be deleted, and executes a process similar to S502 and S503; or when a determining result indicates that the Bluetooth device 1 is not currently bound to the another screen, the SoC 102 determines that the Bluetooth device 1 is deleted, and executes a process similar to S504 to S510. For an example scenario, refer to the scenario 13 and the scenario 14.

An example of deleting a Bluetooth device or canceling pairing with a Bluetooth device is used to describe the foregoing implementations. In another implementation, deleting a Bluetooth device may also be canceling a connection to the Bluetooth device, but not canceling pairing. Specific descriptions are similar to descriptions of the foregoing implementations, and details are not described again.

The foregoing embodiments are described by using a Bluetooth communication technology as an example. Embodiments of this application may also be applied to other short-range communication technologies such as Wi-Fi, NFC, IR, GNSS, SLE, and SLB. This is not limited in embodiments of this application.

All or a part of the method provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like. The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A short-range communication method, applied to an electronic device, wherein the electronic device comprises a short-range communication chip, a first display screen, and a second display screen, and both the first display screen and the second display screen correspond to the short-range communication chip; and the method comprises:
receiving a first operation performed on the first display screen;
in response to the first operation, establishing a connection to a first communication device by using the short-range communication chip, and performing binding to the first communication device by using the first display screen; and
displaying a first interface on the first display screen, and displaying a second interface on the second display screen, wherein the first interface comprises the first communication device in a paired state, the first communication device on the first interface is visually distinguished, the second interface comprises the first communication device in the paired state, and the first communication device on the second interface is not visually distinguished.

2. The method according to claim 1, wherein the first interface and the second interface are short-range communication function setting interfaces.

3. The method according to claim 1 or 2, wherein before receiving the first operation performed on the first display screen, the method further comprises:
finding, through scanning, the first communication device by using the short-range communication chip, displaying a third interface on the first display screen, and displaying a fourth interface on the second display screen, wherein the third interface comprises the first communication device in an unpaired state, the fourth interface comprises the first communication device in the unpaired state, and the first operation is an operation performed on the first communication device on the third interface.

4. The method according to any one of claims 1 to 3, wherein a visually distinguished manner comprises at least one of the following: highlighting, displaying in bold, displaying in italics, underlining, a background shade, a border around characters, a font color different from that of another text, a font type different from that of another text, and a font size different from that of another text.

5. The method according to any one of claims 1 to 4, wherein the first interface comprises first prompt information and/or the second interface comprises second prompt information;
the first prompt information indicates that the first communication device is connected to the electronic device and/or the first prompt information indicates that the first communication device is bound to the first display screen; and
the second prompt information indicates that the first communication device is connected to the electronic device and/or the second prompt information indicates that the first communication device is bound to the first display screen.

6. The method according to any one of claims 1 to 5, wherein the method further comprises:
receiving a second operation performed on the first communication device on the second interface;
in response to the second operation, cancelling binding to the first communication device by using the first display screen, and performing binding to the first communication device by using the second display screen; and
displaying a fifth interface on the first display screen, and displaying a sixth interface on the second display screen, wherein the fifth interface comprises the first communication device in the paired state, the first communication device on the fifth interface is not visually distinguished, the sixth interface comprises the first communication device in the paired state, and the first communication device on the sixth interface is visually distinguished.

7. The method according to any one of claims 1 to 6, wherein the short-range communication chip supports connections to N communication devices, and N is an integer greater than 1; and the method further comprises:
when the short-range communication chip establishes connections to S communication devices, receiving a third operation performed on the first display screen, wherein the third operation is used to trigger a connection to a second communication device, the second communication device is different from the S communication devices, and S is a positive integer less than N;
in response to the third operation, determining whether (S+1) is less than or equal to N; and
when (S+1) is less than or equal to N, establishing the connection to the second communication device by using the short-range communication chip, and performing binding to the second communication device by using the first display screen.

8. The method according to claim 7, wherein the method further comprises:
when (S+1) is greater than N, displaying third prompt information on the first display screen, wherein the third prompt information indicates that the connection to the second communication device is unachievable;
when (S+1) is greater than N, disconnecting the short-range communication chip from a third communication device in the S communication devices, establishing the connection to the second communication device by using the short-range communication chip, and performing binding to the second communication device by using the first display screen; or
when (S+1) is greater than N, establishing the connection to the second communication device by using the short-range communication chip, and performing binding to the second communication device by using the first display screen, wherein the second communication device bound to the first display screen is in an unavailable state.

9. The method according to claim 7 or 8, wherein the short-range communication chip supports connections to N communication devices for an audio service, and the S communication devices and the second communication device each correspond to the audio service.

10. The method according to claim 7 or 8, wherein the short-range communication chip supports connections to N communication devices for an audio service; and determining whether (S+1) is less than or equal to N comprises:
when the S communication devices and the third communication device each correspond to the audio service, determining whether (S+1) is less than or equal to N; and
the method further comprises:
when the S communication devices correspond to the audio service, and the third communication device corresponds to another service other than the audio service, in response to the third operation, establishing a connection to the third communication device by using the short-range communication chip, and performing binding to the third communication device by using the first display screen.

11. The method according to any one of claims 1 to 10, wherein the method further comprises:
receiving a fourth operation performed on a fourth communication device on the second interface;
in response to the fourth operation, establishing a connection to the fourth communication device by using the short-range communication chip, and performing binding to the fourth communication device by using the second display screen; and
displaying a seventh interface on the first display screen, and displaying an eighth interface on the second display screen, wherein the seventh interface comprises the first communication device and the fourth communication device that are in a paired state, the first communication device on the seventh interface is visually distinguished, the fourth communication device on the seventh interface is not visually distinguished, the eighth interface comprises the first communication device and the fourth communication device that are in the paired state, the first communication device on the eighth interface is not visually distinguished, and the fourth communication device on the eighth interface is visually distinguished.

12. The method according to any one of claims 1 to 10, wherein the first interface comprises the first prompt information, and the first prompt information indicates that the first communication device is connected to the electronic device and indicates that the first communication device is bound to the first display screen; and the method further comprises:
receiving a fifth operation performed on a fifth communication device on the first interface;
in response to the fifth operation, disconnecting the short-range communication chip from the first communication device, establishing a connection to the fifth communication device by using the short-range communication chip, and performing binding to the fifth communication device by using the first display screen; and
displaying a ninth interface on the first display screen, wherein the ninth interface comprises the first communication device and the fifth communication device that are in a paired state, the first communication device on the ninth interface is not visually distinguished, the ninth interface does not comprise the first prompt information, the fifth communication device on the ninth interface is visually distinguished, the ninth interface comprises fourth prompt information, and the fourth prompt information indicates that the fifth communication device is connected to the electronic device and indicates that the fifth communication device is bound to the first display screen.

13. The method according to any one of claims 1 to 10, wherein the first interface comprises the first prompt information, and the first prompt information indicates that the first communication device is connected to the electronic device and indicates that the first communication device is bound to the first display screen; and the method further comprises:
receiving a sixth operation performed on a sixth communication device on the first interface;
in response to the sixth operation, establishing a connection to the sixth communication device by using the short-range communication chip, and performing binding to the sixth communication device by using the first display screen; and
displaying a tenth interface on the first display screen, wherein the tenth interface comprises the first communication device and the sixth communication device that are in a paired state, the first communication device and the sixth communication device on the tenth interface are visually distinguished, the tenth interface comprises the first prompt information and fifth prompt information, and the fifth prompt information indicates that the sixth communication device is connected to the electronic device and indicates that the sixth communication device is bound to the first display screen.

14. The method according to claim 13, wherein establishing the connection to the sixth communication device by using the short-range communication chip, and performing binding to the sixth communication device by using the first display screen comprise:
when a multi-device connection function of the first communication device is enabled, establishing the connection to the sixth communication device by using the short-range communication chip, and performing binding to the sixth communication device by using the first display screen; and
the method further comprises:
when the multi-device connection function of the first communication device is disabled, disconnecting the short-range communication chip from the first communication device, establishing the connection to the sixth communication device by using the short-range communication chip, and performing binding to the sixth communication device by using the first display screen; or
when the multi-device connection function of the first communication device is disabled, displaying sixth prompt information on the first display screen, wherein the sixth prompt information indicates that the connection to the sixth communication device is unachievable.

15. The method according to any one of claims 1 to 14, wherein the method further comprises:
communicating, by the first display screen, with the first communication device by using the short-range communication chip.

16. The method according to any one of claims 1 to 15, wherein the short-range communication chip supports communication with P communication devices, and P is a positive integer; and the method further comprises:
when the electronic device communicates with T communication devices by using the short-range communication chip, receiving a seventh operation performed on the first display screen, wherein the seventh operation is used to trigger use of the first communication device, the first communication device is different from the T communication devices, and T is a positive integer less than P;
in response to the seventh operation, determining whether (T+1) is less than or equal to P;
and
when (T+1) is less than or equal to P, communicating, by the first display screen, with the first communication device by using the short-range communication chip; or
when (T+1) is greater than P, displaying seventh prompt information on the first display screen, wherein the seventh prompt information indicates that the first communication device is unavailable.

17. The method according to claim 16, wherein the short-range communication chip supports transmission of audio data with P communication devices; and determining whether (T+1) is less than or equal to P comprises:
when the T communication devices and the first communication device each correspond to the audio service, determining whether (T+1) is less than or equal to P; and
the method further comprises:
when the T communication devices correspond to the audio service, and the first communication device corresponds to another service other than the audio service, in response to the seventh operation, communicating, by the first display screen, with the first communication device by using the short-range communication chip.

18. The method according to any one of claims 1 to 17, wherein the method further comprises:
receiving an eighth operation performed on the second display screen, wherein the eighth operation is used to trigger deletion of the first communication device;
in response to the eighth operation, determining whether the first display screen communicates with the first communication device by using the short-range communication chip; and
when the first display screen communicates with the first communication device by using the short-range communication chip, displaying eighth prompt information on the second display screen, wherein the eighth prompt information indicates that the first communication device is undeletable; or
when the first display screen does not communicate with the first communication device by using the short-range communication chip, canceling pairing between the short-range communication chip and the first communication device.

19. The method according to any one of claims 1 to 17, wherein the method further comprises:
receiving a ninth operation performed on the second display screen, wherein the ninth operation is used to trigger deletion of the first communication device;
in response to the ninth operation, determining whether to perform binding to the first communication device by using the first display screen; and
when the first display screen is bound to the first communication device, displaying ninth prompt information on the second display screen, wherein the ninth prompt information indicates that the first communication device is undeletable; or
when the first display screen is not bound to the first communication device, canceling pairing between the short-range communication chip and the first communication device.

20. The method according to any one of claims 1 to 19, wherein the method further comprises:
disconnecting the short-range communication chip from the first communication device; and
when establishing the connection to the first communication device by using the short-range communication chip, performing binding to the first communication device by using the first display screen.

21. The method according to any one of claims 1 to 19, wherein the method further comprises:
disconnecting the short-range communication chip from the first communication device; and
when establishing the connection to the first communication device by using the short-range communication chip, performing binding to the first communication device by using a preset display screen of the electronic device, wherein the preset display screen is the first display screen or the second display screen.

22. The method according to any one of claims 1 to 19, wherein the method further comprises:
disconnecting the short-range communication chip from the first communication device;
when establishing the connection to the first communication device by using the short-range communication chip, detecting an area in which the first communication device is located; and
when the first communication device is located in an area of the first display screen, performing binding to the first communication device by using the first display screen; or
when the first communication device is located in an area of the second display screen, performing binding to the first communication device by using the second display screen.

23. The method according to any one of claims 1 to 22, wherein the electronic device comprises a first user space and a second user space, the first user space corresponds to the first display screen, and the second user space corresponds to the second display screen.

24. The method according to any one of claims 1 to 23, wherein the electronic device is a vehicle or a vehicle-mounted device, the first display screen is a front passenger screen, and the second display screen is a rear passenger screen.

25. An electronic device, comprising a transceiver, a processor, and a memory, wherein the memory is configured to store a computer program, and the processor invokes the computer program to perform the method according to any one of claims 1 to 24.

26. A computer storage medium, wherein the computer storage medium stores a computer program; and when the computer program is executed by a processor, the method according to any one of claims 1 to 24 is implemented.
